# EUROPEAN PATENT SPECIFICATION

(11) **EP 1 466 468 B1**
(45) Date of publication and mention of the grant of the patent: **02.08.2006**
(21) Application number: 02783341.7
(22) Date of filing: 03.10.2002
(51) Int. Cl.: H04M 3/533, G10L 15/26, H04L 29/06

(54) **MULTI-MODAL MESSAGING AND CALLBACK WITH SERVICE AUTHORIZER AND VIRTUAL CUSTOMER DATABASE**
MEHRFACHMODALES NACHRICHTENÜBERTRAGUNGSRÜCKRUFSYSTEM MIT DIENSTAUTHORISIERER UND VIRTUELLER KUNDENDATENBANK
MESSAGERIE ET RAPPEL MULTIMODAUX AVEC AUTORISATION DE SERVICE ET BASE DE DONNEES CLIENT VIRTUELLE

(30) Priority: 03.10.2001 US 326827 P; 03.10.2001 US 326835 P; 03.10.2001 US 326826 P; 03.10.2001 US 326902 P
(43) Date of publication of application: 13.10.2004
(73) Proprietor: Accenture Global Services GmbH, 8200 Schaffhausen (CH)
(72) Inventor: GAILEY, Michael, L., Dunwoody, GA 30338 (US); PORTMAN, Eric, A., Norcross, GA 30092 (US); BURGISS, Michael, J., Smyrna, GA 30082 (US)
(74) Representative: McLeish, Nicholas Alistair Maxwell
(86) International application number: PCT/IB2002/004371
(87) International publication number: WO 2003/030507

(56) References cited:
- EP-A- 0 644 680
- WO-A-00/17854
- WO-A-01/69422
- WO-A-99/55049
- DE-A- 19 756 851
- US-B1- 6 219 638

## Description

### Field of the Invention

The present invention relates to mobile communication and, more particularly, to a method and system for communicating with a terminal over an access network using multiple communication modes during a single business transaction or interaction.

### Background of the Invention

Wireless communication devices have recently evolved from a technology used by an elite segment of the population to a technology that is used by the masses. Worldwide, the number of wireless communication device users has reached a staggering number and is growing all of the time. In the near future, it is envisioned that almost everyone will own or use some sort of wireless communication device that is capable of performing a variety of functions. In addition to traditional wireless communication devices, many different types of portable electronic devices are in use today. In particular, notebook computers, palm-top computers, and personal digital assistants (PDA) are commonplace.

Users of wireless telephones and other wireless devices have recently been able to place a phone call to an automated system to request information by speaking to a basic automated speech recognition system. The basic automated speech recognition system typically responds to the caller using text-to-speech and/or recorded speech prompts. This method of information delivery is cumbersome and challenging for the caller as well as very time consuming, thereby causing callers unnecessary frustration. In some cases, the system returns too much information and the caller must listen to the entire response in order to get the information they want. In other systems the caller must verbally navigate through a deep hierarchy of prompts to get to the specific piece of information they seek. As such, a need exists for a system that is capable of providing a structured response to a user request that takes advantage of voice and text enabled wireless communication devices to provide easy user interaction.

Wireless terminal users may receive services through their respective wireless terminals by calling an automated or operator-assisted service. These services may respond to the caller by allowing the user to navigate through a menu of items that are presented by the automated operator. With the advent of multi-modal messaging, users can now receive messages in a multiple variety of formats. However, some of these formats can more easily/effectively be comprehended in the form of human speech rather than text. As such, a need exists for a method of enabling the caller to reply via text to the text message sent by the system in order to initiate a phone call to the wireless terminal during which the information in the message, or additional information, is read aloud to the caller.

The subscriber of the wireless terminal may not desire to obtain data services from respective third-party companies. This may be for several reasons such as the user may not want to pay for the data service or the user may simply not be interested in the data service. Multi-modal messaging in wireless terminals is a new development. This allows users of wireless terminals to send and receive messages in several data formats at the same time. In addition, multi-modal messaging allows the user to receive more data that is easier to manage on their remote terminal during a session. As such, a need exists for methods of incorporating multi-modal messaging in data service authorization and setup.

One of the challenges for providers of wireless services involves the ability to personalize content and services for individual users. An area where significant personalized content and services may be made available is consumer information related to goods and services. Such goods and services may include, for example, banking, financial management, travel, consumer goods, insurance, utility services and the like. Inherently, a consumer profile that provides such personalized content includes information related to many different business and content providers, such as, for example account numbers, passwords, personalized data, usage profiles, security clearances, preferences, tastes, spending habits, etc.

Existing systems and methods for creating and utilizing broad, multi-company consumer profiles for the enablement of personalized content and services (both wireless and non-wireless) are typically managed by the consumer and/or by a third-party agency. Consumer management generally involves reliance upon the consumer to identify themselves, and input personally relevant information into a profile. The profile may then be maintained and updated by the consumer as the information and related data changes.

In general, third-party agencies collect consumer profile data from multiple businesses and content providers for storage in a central location. Accordingly, control of the data significantly shifts from the businesses and content providers who provide the data, to the third-party agency. In addition, prior consumer authorization may be required of the businesses and content providers before such data may be shared with a third-party agency. Further, making such data available to third party agencies may amount to sharing of competitively sensitive information among business and content providers who may directly compete for the same consumers.

EP-A-0,924,916 describes a method for exchanging information between a subscriber of a telecommunication network and a service, with the service having at its disposal locality information concerning the whereabouts of the terminal of the subscriber. Once a connection has been established between the subscriber and the service, the subscriber transmits a search word to an operator of the service in the form of spoken language. The operator enters the search word together with the locality information into a search database and the result provided by the database is then transmitted either completely or in part to the subscriber.

US patent no. 6,219,638 describes a messaging system for receiving speech over a telephone and converting the speech to text, including a speech recognition system for converting speech to text and a speech synthesizer for converting the text to speech for playing back the synthesized speech for correction by the user.

### Summary of the Invention

The present invention provides a multi-modal messaging system according to claim I and a method of providing multi-modal messages in a wireless communication system according to claim 20.

Further objects and advantages of the present invention will be apparent from the following description, reference being made to the accompanying drawings wherein embodiments of the invention are clearly illustrated.

### Brief Description of the Drawings

Figure 1 illustrates an embodiment of a multi-modal messaging system for a wireless communication system.
Figure 2 illustrates the general process steps performed by an embodiment of the multi-modal messaging system during an illustrative operation.
Figure 3 illustrates an embodiment of a multi-modal callback system for use in a wireless communication system.
Figure 4 illustrates the general process steps performed by an embodiment of the multi-modal callback system during an illustrative operation.
Figure 5 illustrates a service authorization system for a wireless access network.
Figure 6 illustrates steps taken in a pushed request prior to service.
Figure 7 illustrates steps taken in a pulled request prior to service.
Figure 8 illustrates steps taken in a pushed request at the time of service.
Figure 9 illustrates steps taken in a pulled request at the time of service.
Figure 10 illustrates an example of the virtual customer database (VCDB) system.
Figure 11 is a block diagram of the administrator depicted in Figure 10.
Figure 12 is a more detailed block diagram of a portion of the virtual customer database system in Figure 10.
Figure 13 is a flow diagram illustrating example operation of the portion of the virtual customer database system depicted in Figure 12.
Figure 14 is a flow diagram illustrating another example operation of the portion of the virtual customer database system depicted in Figure 12.

### Detailed Description of the Presently Preferred Embodiments of the Invention

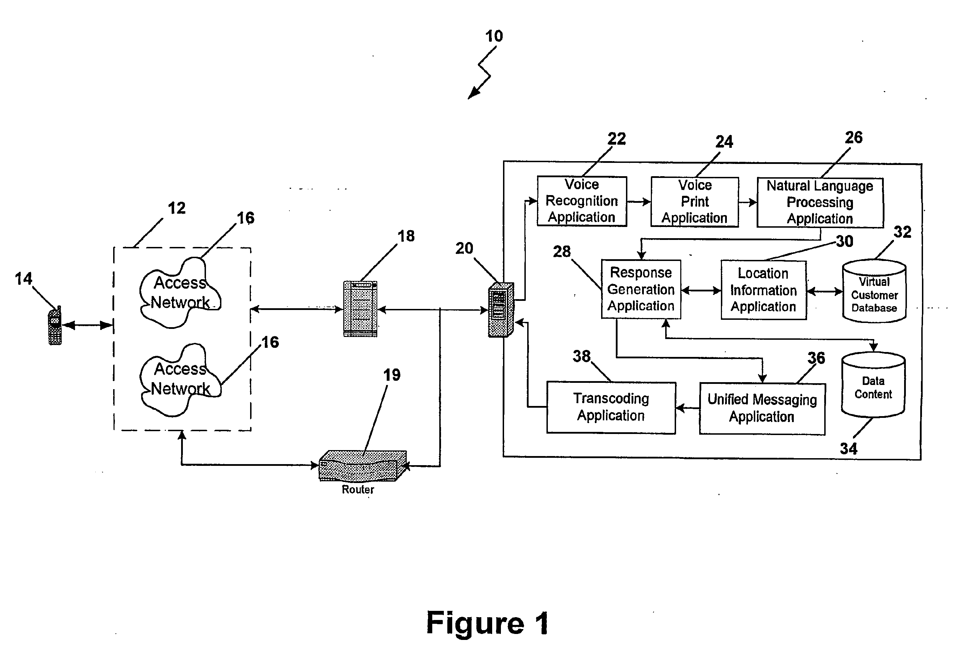

Referring to Fig. 1, the present invention discloses a multi-modal messaging system 10 for a wireless communication system 12. The wireless communication system 12 includes at least one wireless terminal 14 that is connected to at least one wireless access network 16. Although not illustrated, the wireless access network 16 generally includes a base station transceiver that is connected to a base station server. The base station server is connected to a network connection that may be a publicly switched telephone network or a private network. In the embodiment illustrated in Fig. 1, the wireless access network 16 is connected to at least one switch 18, thereby connecting the wireless terminal 14 to a multi-modal message server 20. However, as further illustrated in Fig. 1, the wireless access network 16 could also be connected to a router 19 in an IP-based wireless access network as the function of transferring data between the wireless terminal 14 and the multi-modal message server 20 is provided by both types of devices.

The multi-modal messaging system 10 discloses a method of communicating with a wireless terminal 14 using multiple modes of communication including, but not limited to, human speech and text-based messages during a single transaction or call. As set forth in detail below, wireless terminals 14 that are connected to the wireless access network 16 preferentially communicate with the multi-modal message server 20 via the wireless access network 16 to which the wireless terminal 14 is connected. Preferentially, the multi-modal messaging system 10 also includes an automated speech recognition application with which the user of the wireless terminal 14 interacts to request and receive information from various databases containing information from a plurality of businesses.

Referring to Fig. 1, during operation, the wireless terminal 14 is capable of transmitting and receiving messages that may come in several formats. The formats may include human speech, which is produced using a speaker and a microphone, and text and graphic formats that are generated on a display of the wireless terminal 14. In this embodiment of the present invention, the wireless terminal 14 preferentially transmits a tailored request for information to the multi-modal message server 20 in either human speech or text based message formats. Speech-based tailored requests for information are transmitted by means of a wireless telephone call as known in the art. Text-based tailored requests for information are transmitted in the form of a text message that is transmitted using a wireless communication protocol, including, but not limited to, a short message service ("SMS"), any wireless application protocol ("WAP"), or any email protocol.

In one embodiment of the present invention, a user of the wireless terminal 14 establishes a connection with the multi-modal message server 20 by dialing a phone number that is associated with a participating company that operates the multi-modal message server 20. The act of dialing a predefined phone number associated with the multi-modal message server 20 causes the wireless access network 16 to connect the call to the multi-modal message server 20. In yet another embodiment, the user of the wireless terminal 14 is capable of establishing a connection with the multi-modal message server 20 from an interactive menu that is generated on the wireless terminal 14 through a wireless application protocol or by predefined user or factory settings. Selecting a link or prompt to a respective multi-modal message server 20 contained in the interaction menu thereby establishes the connection between the remote terminal 14 and the multi-modal message server 20. In yet another embodiment, the user may enter an address or universal resource locator ("URL") of the multi-modal message server 20 to establish the connection between the wireless terminal 14 and the multi-modal message server 20.

Although not specifically illustrated, the operator of the multi-modal message server 20 may or may not be the actual company from which data is sought by the user of the wireless terminal 14. The company operating the multi-modal message server 20 may be a third party that is licensed or granted permission to provide certain types of data to consumers having remote terminals 14 that are associated with the company operating the multi-modal messaging system 10. For example, the provider of the wireless communication system 12 may have a contract with the operator of the multi-modal message server 20 and, in turn, another company from which the user is seeking information may also have a contract with the operator of multi-modal message server 20. The cooperation of all parties in these embodiments enables the multi-modal messaging system 10 to function properly despite the varying types of contractual arrangements made between respective parties. Further, the multi-modal message server 20 may house the data files that contain the information requested by the user or the multi-modal message server 20 may be connected to several different company file servers that contain the desired information that is responsive to the requests for information that are generated by the wireless terminals 14.

In response to the requests for information that are generated by the wireless terminal 14, the multi-modal message server 20 generates structured responses that contain data that is responsive to the requests for information. In transmitting the structured responses to the wireless terminal 14, the multi-modal messaging system 10 can select from a group of modes of communication including, but not limited to, text modes, graphic modes, animation modes, multi-media modes, pre-recorded and synthesized sounds including synthesized human speech modes, music modes, and noise modes. In particular, the multi-modal messaging system 10 uses at least two of the above-referenced modes to transmit responses to the wireless terminals 14 during a single transaction or user interaction.

As set forth above, the methods and protocols for transmitting information in the form of text from the multi-modal messaging system 10 to the wireless terminal 14 include, but are not limited to, SMSs, WAPs and email protocols. In the case of audible information, the response is preferentially transmitted from the multi-modal message server 20 to the remote terminal 14 during a wireless telephone call that may be initiated by either the remote terminal 14 or the multi-modal message server 20. In yet another embodiment of the present invention, the audible information contained in a response may be transmitted in an automated fashion using applications capable of synthesizing human speech and directing the synthesized human speech to a voice mail system associated with the intended recipient's wireless terminal 14. As used herein, the term voice mail system includes any system that is capable of receiving, storing and retrieving audible messages in an automated fashion, either autonomously or on-demand via a telephone network. These include voice mail servers and both analog and digital answering machines.

As set forth above, the present invention discloses the use of more than one mode of communication during the course of a single interaction between the wireless terminal 14 and the multi-modal message server 20. A single interaction is defined as a set of messages required to meet the needs of a consumer or user of the wireless terminal 14 that is requesting a specific service, specific content, or specific information from the multi-modal message server 20 and the response or responses that are delivered by the multi-modal message server 20 in response to the requests for information from the wireless terminal 14. The present invention discloses methods of using multiple modes of communication between a respective remote terminal 14 and a respective multi-modal message server 20 during a single interaction, thereby allowing the multi-modal message server 20 to respond to the demands of the user using both voice and text-based messages, for example.

As set forth above, during operation, the wireless terminal 14 is operable to generate tailored requests for information about a particular product or service. In this embodiment, the multi-modal message server 20 responds to the wireless terminal 14 by sending content responsive to the tailored requests for information via messages that are formatted as a text-based message and a voice-based message. In other embodiments, the wireless terminal 14 may only be capable of conducting a wireless telephone call or the transmission or receipt of text messages, but not both operations at the same time. As such, in these embodiments of the present invention, the multi-modal messaging system 10 is designed to provide the wireless terminal 14 with text-based messages that are responsive to the requests for information after the wireless telephone call has been disconnected and the user has already received the voice-based messages that are responsive to the requests for information. In addition, the voice call connection between the wireless terminal 14 and the multi-modal message server 20 and the text-based messages that are sent to the wireless terminal 14 may be transmitted from the multi-modal message server 20 using a dissimilar wireless communication protocol.

The multi-modal messaging system 10 preferentially also includes a voice-recognition application 22. The voice-recognition application 22 is preferentially located on the multi-modal message server 20, but may also be located on a separate server that is connected with the multi-modal message server 20. The voice-recognition application 22 determines the identity of or recognizes respective words that are contained in voice-based requests for information that are generated by users of the wireless terminal 14. The words that are identified by the voice-recognition application 22 are used as inputs to a response-generation application 28 in one embodiment of the present invention. As set forth in greater detail below, the response-generation application 28 is capable of generating multi-modal responses that contain data responsive to the requests for information that are generated by the users of the wireless terminal 14. As further set forth in detail below, the words that are identified may also be used as an input to a natural language processing application 26 that determines the intent of the words contained in the requests for information and not just the identity of the words.

In another embodiment of present invention, the multi-modal messaging system 10 includes a voice print application 24 that provides security to users of the wireless terminals 14 by analyzing voice prints of the user that are obtained by sampling segments of the user's speech. If the user is authenticated, access to the multi-modal messaging service 10 is provided to the user, and, if the user is not authenticated, access is denied. Further, if the user desires to limit access to the multi-modal messaging system 10 to only themselves or select individuals, then a preference setting may be set by the owner of the wireless terminal 14 that restricts access to only pre-authorized users. The voice print application 24 can also be used to limit use of the wireless terminal 14 so that if the remote terminal 14 is stolen, it will not be able to be used by the person who steals the wireless terminal 14. The voice print application 24 can also be used to determine if the user is an authorized user that can be provided with information related to a specific account by providing authorization and authentication. The voice print application 24 can be located on the multi-modal message server 20 or on a voice print application server that is connected to the multi-modal message server 20.

As briefly set forth above, in yet another embodiment of the present invention, the multi-modal messaging system 10 includes a natural language processing application 26. The natural language processing application 26 works in conjunction with the voice-recognition application 22 to ascertain the meaning of natural language requests for information that are received from the wireless terminals 14. The natural language processing application 26 processes the identified words contained in the voice signals to ascertain the meaning or intent of the words that are contained in the voice signals. As such, during operation, the voice-recognition application 22 identifies or recognizes the particular words that are contained in the voice signals and the natural language processing application 26 interprets the meaning or intent of the recognized words contained in the voice signals. The natural language processing application 26 provides functionality to the multi-modal messaging system 10 that allows users to enter requests for information using natural language that is normally used in conversations between two human subjects.

The natural language processing application 26 may be located on the multi-modal message server 20, but, in an effort to increase the level of performance, could also be located on a separate server or a separate set of servers connected with the multi-modal message server 20. For a more detailed discussion of the natural language processing application, please refer to U.S. Application Serial No. 10/131,898, entitled "Natural Language Processing for a Location-Based Services System" filed on April 25, 2002.

As illustrated in Fig. 1, the natural language processing application 26 is connected to a response-generation application 28 that uses a plurality of programmed rules in combination with the command or word contained in the request to determine what information should be retrieved and returned to the wireless terminal 14. The response-generation application 28 uses the words identified by the voice-recognition application 22 and the intent or meaning of the words determined by the natural language processing application 26 to generate a search query that retrieves the appropriate information from a content database 34. In other embodiments, only the words identified from the voice-recognition application 22 are used by the response-generation application 28 to generate a response to the tailored requests for information.

In another embodiment of the multi-modal messaging system 10, a location information application 30 is used to determine a geographic location of the wireless terminal 14. The location information application 30 may be located on the multi-modal message server 20 or on another server that is connected to the multi-modal message server 20. The geographic location of the user can be used to focus or narrow responses that are generated by the response-generation application 28 to a specific geographic area that is appropriate to the user of the wireless terminal 14. Certain types of requests for information generated by users of the wireless terminals 14 will be dependent on the current geographic location of the wireless terminal 14 and the location information application 30 is used to provide the response-generation application 28 with location data that is needed to generate a geographically tailored response to requests for information that are dependent on the geographic location of the wireless terminal 14.

The response-generation application 28 may also be connected to a virtual customer database 32 that may use application and customer proprietary information to determine user preferences for modes of communication. In addition, the virtual customer database 32 may include customer data that includes information about the wireless terminal 14 that the user is using such as limitations for the amount or type of data content that the wireless terminal 14 can receive or the type of display used by the wireless terminal 14 so that responses can be structured in a format that is compatible with the display. In addition, the user may choose not to receive certain types of large files, such as multimedia files and so forth, and these settings may be found in the virtual customer database 32 in the profile of the user.

As set forth above, the response-generation application 28 is used to generate structured responses to the tailored requests for information that are generated by the wireless terminal 14. Once the customer preferences and identification have been determined using the virtual customer database 32 and possibly the geographic location of the wireless terminal 14 has been determined using the location information application 30, a query is generated and sent to the content database 34 that is connected to the response-generation application 28. The query is used to retrieve data that is responsive to the request for information from the content database 34. The content database 34 may be located locally on the multi-modal message server 20 or housed on other servers that are connected to the multi-modal message server 20. For example, if the wireless terminal 14 is connected to a multi-modal message server 20 provided by an airline company, the details of a flight on which a user is booked may be retrieved from the content database 34 if so desired.

Expanding on the example set forth above, the user of the wireless terminal 14 is a regular customer of the airline company and is registered with the airline company. The virtual customer database 32 will know this fact and will assist the response-generation application 28 by providing detailed information to the response-generation application 28 about that particular user. For example, the virtual customer database 32 may contain a customer identification number and a virtual key that is associated with that particular user. This information can be added to the query that is generated by the response-generation application 28, which allows the response-generation application to more accurately generate responses. The airline company multi-modal messaging system will be able to use this information to more accurately provide responses to the user that contain accurate data related to that particular user's account and status. Further, this information can be used for authorization and authentication purposes.

Once the data for the response to the user's request has been located by the response-generation application 28, the multi-modal messaging system 10 prepares this data for transmission to the wireless terminal 14. A unified messaging application 36 preferentially combines the information retrieved into a unified response that can be sent to the wireless terminal 14 if the response-generation application 28 does not format the response into the predefined message formats. In an embodiment, the unified response that is generated contains a text-based response and a voice-based response that is created using the data that is provided by the response-generation application 28. In essence, the unified message application 36 prepares the multi-modal response by generating a response in at least two formats that are suitable for the wireless terminal 14. As set forth above, these formats may include a text-based message, a graphics-based message, a voicemail message, and an email message.

After the unified message is created, a transcoding application 38 may be used to format the unified message into a format that is suitable for the wireless terminal 14 using information already known about the wireless terminal 14, which is preferentially retrieved from the virtual customer database 32. For example, for a text-based message, the transcoding application 38 may convert the text-based response into an SMS or WAP format. For a voice-based message, the transcoding application 38 may use a voice synthesis application to convert the speech-based response into a format suitable for the wireless terminal 14. The response is then sent to the wireless access network 16, which thereby transmits the multi-modal response to the wireless terminal 14.

Users of the wireless terminals 14 can define the manner in which the multi-modal messaging system 10 may send responses to them, or the multi-modal messaging system 10 may contain information, preferably stored in the virtual customer database 32, about each user of the multi-modal messaging system 10 and the user's respective remote terminal 14. This allows the multi-modal messaging system 10 to generate and transmit responses that may be in the format of the user. The multi-modal messaging system 10 allows users to determine what types of services and modes of communication will be used to transmit responses to the wireless terminal 14.

Referring to Fig. 1, in an embodiment of the present invention, a call is placed on the wireless access network 16 from the wireless terminal 14 to the multi-modal message server 20. In other embodiments, a connection may be established between the wireless terminal 14 and the multi-modal message server 20 through the selection of a menu item or the entry of an address on the wireless terminal 14. The wireless terminal 14 also preferentially passes information to the multi-modal message server 20 about the wireless terminal 14 using SS7, ISDN, or other in-band or out-of-band messaging protocols. A calling number identification ("CNI") is preferentially passed as well as a serial number for the wireless terminal 14. This information can be used to determine the identity of the user to which the wireless terminal 14 belongs.

In one embodiment, the multi-modal message server 20 uses an interface to detect the call and 'answers' the call from the wireless terminal 14 using text-to-speech messages or recorded speech prompts. The prompts can ask the user to speak the request for information using some set of predefined commands or may ask the user to utter the request for information using natural language, which will later be processed by the voice-recognition application 22 and the natural language application 26. The text-to-speech messages or recorded speech prompts are transmitted across the wireless access network 16 to the wireless terminal 14.

During operation, the user speaks the request for information into the wireless terminal 14 and the wireless terminal 14 and wireless access network 16 transmit the voice signal representing the request for information to the multi-modal message server 20. In one mode of operation, the user speaks one of a pre-defined command phrases or words, which is then interpreted and used by the voice-recognition application 22 to generate a response. The user's speech is converted to text using the voice-recognition application 22, which is then used as an input to a search query that interprets the user's command. As set forth below, based on the user's command, a response is generated by the response-generation application 28 that is sent to the user.

In one embodiment of the present invention, the multi-modal messaging system 10 incorporates a voice printing application 24 in conjunction with the database of proprietary customer information 34 to determine if the caller using the wireless terminal 14 is the owner of (or assigned to) the wireless terminal 14. If the caller is not the owner of the wireless terminal 14 (which may occur if someone borrows the wireless terminal 14 from the owner), the multi-modal messaging system 10 proceeds with the call, but does not personalize any of the services based on proprietary customer information associated with the assigned user. Therefore, at any point in the process where the multi-modal messaging system 10 would use customer proprietary information, the multi-modal messaging system 10 could use additional prompts to request this information from the caller. The multi-modal messaging system 10 could also restrict access to the multi-modal messaging system 10 and the wireless terminal 14 altogether if the assigned user has preset a user preference indicating the restriction of access to unauthorized users.

In another embodiment of the present invention, the multi-modal messaging system 10 can handle requests for information that are entered using natural speech. In this embodiment, the multi-modal messaging system 10 passes the text identified from the voice-recognition application 22 to a natural language processing application 26 that is used to determine the intent or meaning of the words contained in the request. The interpreted intent is processed by the multi-modal messaging system 10 in the same way the pre-defined commands are processed. This is made possible because the natural language processing application 26 is programmed to generate search queries based on the words identified in the request and the intent of the words contained in the request..

The response-generation application 28 uses programmed rules in combination with the commands to determine what information should be retrieved and returned to the wireless terminal 14. These rules are stored in executable code or in a content database 34. In one embodiment of the present invention, if the multi-modal messaging system 10 determines that location information about the wireless terminal 14 is necessary to generate an appropriate response to the request for information, the multi-modal messaging system 10 uses the location information application 30 to determine the geographic location of the wireless terminal 14. The wireless access network 16 can use several location determining applications that are designed to sufficiently determine the geographic location of the wireless terminal 14 to the accuracy necessary to successfully generate a response that is responsive to the request for information. The location information that is generated by the location information application 30 is used as part of the search query that is used to locate the desired information.

Upon determining the data to be returned to the wireless terminal 14 and retrieving this data from a content database 34, the response-generation application 28 of the multi-modal messaging system 10 prepares the content to be sent to the wireless terminal 14. The multi-modal messaging system 10 may use an application and customer proprietary information to determine the customer's preferences for modes of communication. Additionally, this customer data may include information about the wireless terminal 14 assigned to the user such as limitations for the amount or type of data content the device can receive. These methods for storing and accessing the customer proprietary data include those disclosed by the Virtual Customer Database, which is set forth in detail below.

The multi-modal messaging system 10 formats the content contained in the response for the wireless terminal 14 using available information about the wireless terminal 14 and individual preferences of the users. A unified messaging application 3 6 preferentially formats the content into multiple messages, if necessary, to respond to the wireless terminal 14 in the most informative way that is compatible with the wireless terminal 14 to which the user is assigned or has purchased. The multi-modal messaging system 10 preferentially uses a transcoding application 38 to format the content contained in the response into a suitable format for the user's wireless terminal 14 and is capable of generating responses using formats such as WML, HTML and plain text.

The multi-modal messaging system 10 then transmits the content to the wireless access network 16 operated by the carrier and indicates the recipient and the method for transferring the message(s) to the recipient or user. Preferably, the messages are sent as text messages to the wireless terminal 14 using any of (but not limited to) the following: SMS, CPDP, Mobitex. The wireless terminal 14 receives the message(s) and the user is allowed to interact with the content contained in the response from the multi-modal messaging system 10.

In yet another embodiment of the present invention, the multi-modal messaging system 10 is used in combination with a location-based services system where the content of the messages between the system and the wireless terminal 14 contains information that is based on the current geographic location of the wireless terminal 14. The location-based services system may be of the type by which the indicator of the location of the wireless terminal 14 is generated by the wireless terminal 14 and transmitted to the multi-modal messaging system 10, determined by the multi-modal messaging system 10, or by some combination thereof. For a more detailed description of location-based service systems, refer to U.S. Application Serial No. 09/946,111, which was filed on September 4, 2002, entitled "Location-Based Services."

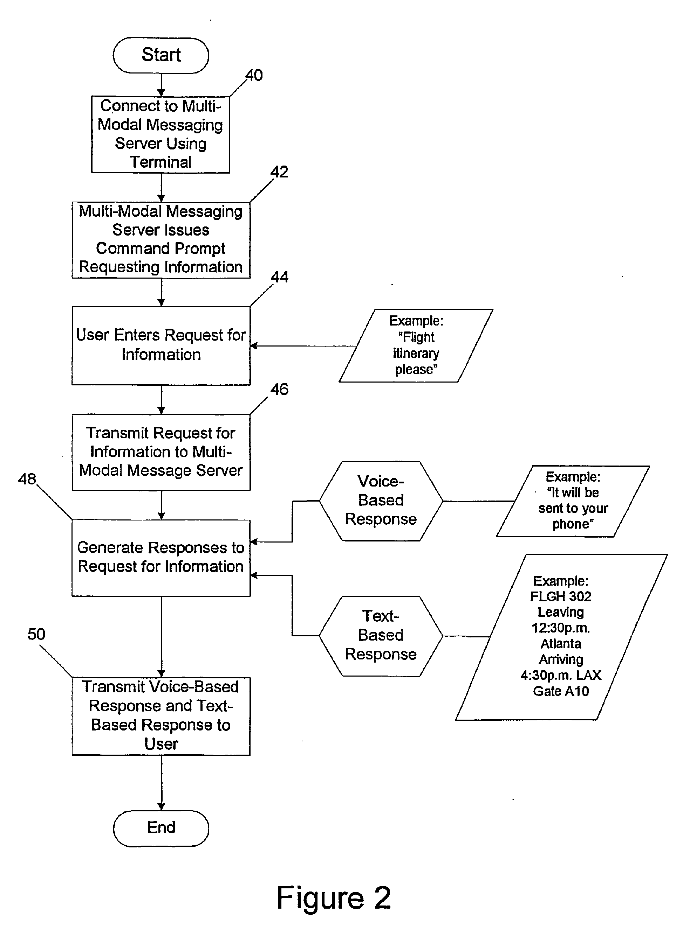

Referring to Fig. 2, an illustrative example of an embodiment of the present invention is set forth below. As an example, a user of wireless terminal 14 is planning a trip and would like to check with his or her airline to determine his/her flight itinerary. At step 40, the user of wireless terminal 14 connects to the multi-modal messaging system 10 of the airline through the wireless access network 16. At step 42, the multi-modal messaging server 20 transmits a command prompt to the user requesting information from the user of the wireless terminal 14. In response, at step 44, the user states a voice request for information, which, in this example, is illustrated as "Flight itinerary, please," which is transmitted to the multi-modal messaging server 20 at step 46.

At step 48, the multi-modal messaging system 10 takes this voice request for information and uses automated speech recognition, which, in this embodiment, includes processing the voice request for information with a voice-recognition application 22 and a natural language processing application 26, to generate a plurality of responses to the request for information. As an example, in the embodiment illustrated in Fig. 2, a voice-based response is generated that states "It will be sent to your phone" and a text-based response is generated that provides the user with the appropriate itinerary information that is tailored for that particular user. At step 50, the multi-modal message server 20 transmits the multi-modal response to the user, which, in Fig. 2, is represented as a voice-based response and a text-based response.

To generate the response, this embodiment uses customer information that is received from the virtual customer database 32 to determine that the user of the wireless terminal 14 has a profile with the airline. The profile is capable of providing the user's customer ID and possibly a virtual key that is associated with that customer that authorizes the wireless terminal 14 to receive data from the airline's database. This information allows the multi-modal messaging system 10 to authenticate and identify the user of the wireless terminal 14 in order to generate an appropriate response from the airline's data files.

The wireless terminal 14 is also capable of responding to the multi-modal message. The user of the wireless terminal 14 can respond to the multi-modal message using several different response methods including voice, keypad selections, touchscreen selections and so forth. In response to the user's response, the multi-modal message server 20 is capable of generating another multi-modal message that may be sent to the wireless terminal 14. For example, a text response sent to the wireless terminal 14 states "Your flight leaves at 5pm and your seat is 45B. An upgrade to 1st class is available. Reply to this message for more information." By replying to the message, the multi-modal message server 20 can generate another multi-modal message that provides the details of upgrading to first class. Other scenarios are available and the above-referenced example should be construed as illustrative and not in a restrictive sense.

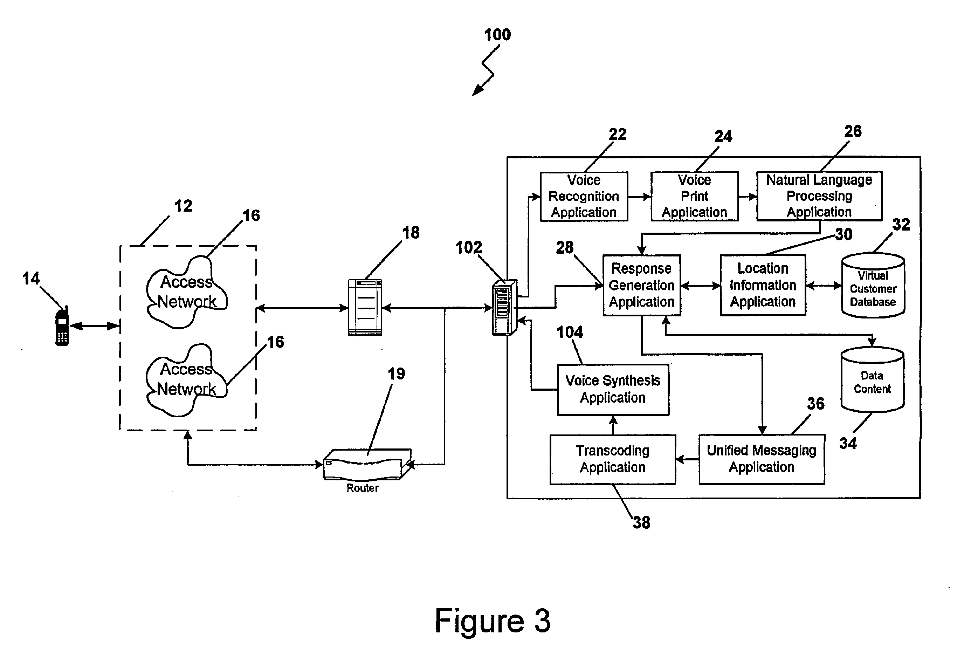

Referring to Fig. 3, wherein like reference numbers refer to the same elements set forth in the previous embodiments, another embodiment of the present invention discloses a multi-modal callback system 100 for a wireless terminal 14 that is connected to at least one wireless access network 16. As illustrated, the wireless communication system 12 is connected to at least one switch 18 and/or a router 19, which is, in turn, connected to a multi-modal callback server 102. The multi-modal callback server 102 may be the same server as the multi-modal message server 20 set forth in the previous embodiments or may be another server. As illustrated, the multi-modal callback server 102 preferentially includes many of the same applications as the multi-modal message server 20.

The multi-modal callback system 100 provides a method for initiating a telephone call between the wireless terminal 14 and the multi-modal callback server 102 for transmitting a predefined speech-based message to the user of the wireless terminal 14. The call is preferentially initiated in an automated fashion by the wireless terminal 14 after the wireless access network 16 receives a message that is transmitted from the wireless terminal 14 to the multi-modal callback server 102 requesting a callback. During the callback, the wireless terminal 14 receives a voice-based message that reads a text-based message to the user of the wireless terminal 14.

During normal operation, the user of the wireless terminal 14 preferentially generates a request for information that is transmitted to the multi-modal callback server 102. The preferred request for information is in the form of a voice-based request for information that is generated using normal speech. The voice request for information can be transmitted in the form of a short message that is sent from the wireless terminal 14 to the multi-modal callback server 102. In one embodiment, the wireless terminal 14 does not establish a permanent connection with the multi-modal callback server 102 when the request for information is sent to the multi-modal callback server 102. The wireless terminal 14 can also transmit the request for information to the multi-modal callback server 102 in the form of a text message. In the embodiment illustrated in Fig. 1, the wireless terminal 14 is illustrated as a wireless phone, but those skilled in the art should recognize that other wireless communication devices (e.g., PDAs, laptops, and various other types of personal communication devices) could be used as a wireless terminal 14.

In an embodiment of the present invention, a multi-modal response to the request for information is preferentially generated by the multi-modal callback server 102 and sent to the wireless terminal 14. The multi-modal response preferentially includes at least a text-based response and a speech-based response. Other types of responses may also be included in the multi-modal response including an email response, an instant message response and a fax response.

Referring to Fig. 3, once the voice request for information is received by the multi-modal callback server 102, a voice-recognition application 22 is used to identify a plurality of words contained in the request for information if the request is in the form of a voice-based request for information. After the words in the voice-request for information are identified, a voice print application 24 can be used to verify that the user has access rights to the multi-modal callback system 100. A natural language processing application 26 can be used to determine an intent associated with the words contained in the voice-based request for information. The identity of the words and the intent of the words are then used to generate an input to a response-generation application 28.

The response-generation application 28 uses the input to generate a response to the request for information that is sent by the user of the wireless terminal 14. The response-generation application 28 preferentially accesses a data content database 34 to retrieve information that is responsive to the request for information. The data content database 34 may be located on the multi-modal callback server 102 or on a data server that is connected to the multi-modal callback server 102.

A location information application 30 may also be included that is used to determine the geographic location of the wireless terminal 14. The geographic location of the wireless terminal 14 is used for requests for information that are dependent upon the geographic location of the user. A virtual customer database 32 may also be included that contains a plurality of user profiles. The user profiles can be used to grant access to the data content database 34 and to authorize the user of the wireless terminal 14. More information about the virtual customer database 34 reference is set forth below.

The multi-modal callback system 100 may also include a voice synthesis application 104. The voice synthesis application 104 is a text-to-speech application that is used to convert text-based responses into a synthesized human voice. As such, if the response-generation application 28 generates a text-based response to the request for information, the user of the wireless terminal 14 is capable of having the text contained therein read back over the wireless terminal 14, as set forth in greater detail below. It is worth noting that the present invention could also be used to audibly play back any kind of text-based message that is sent to the wireless terminal 14, such as short messages or instant messages.

The response-generation application 28 is used to generate a multi-modal response to the user's request for information. In this embodiment of the present invention, the multi-modal response includes a text-based response that is displayed on the display of the wireless terminal 14. At some particular times, such as when driving, users of the wireless terminal 14 may not be able to read the text-based response or may just want to have the text-based response stated in a voice-based response. This embodiment of the present invention allows users of the wireless terminal 14 to convert the text-based response into an audible response if desired.

The multi-modal response may include an interaction menu that is generated on a display of the wireless terminal 14 that allows the user to obtain additional information that may be categorized in the information contained in the text-based response of the multi-modal response. The text-based response may also include graphic information that is representative of a response, such as a trademark or service mark of a respective company. The interaction menu is preferentially set up so that a keypad of the wireless terminal 14 can be used to allow the user to select items from the interaction menu. A pointing device, such as a mouse or touch-pad, may also be used to allow the user to select an item from the interaction menu. The user of the wireless terminal 14 can also use voice-based commands to select items contained in the interaction menu.

After the multi-modal response has been sent to the wireless terminal 14, the connection between the wireless terminal 14 and the multi-modal callback server 102 is preferentially terminated. This may be done for several reasons that relate to cost and proficiency of the multi-modal callback system 100 amongst other reasons. For example, the connection may be terminated so that the multi-modal callback server 102 can focus on other requests from other users, thereby processing requests faster. In addition, there is typically a charge associated with the use of air or access time from the wireless communication system 12 and, as such, the user will likely want to minimize use in order to keep charges down. In IP-based wireless access networks, the wireless terminal 14 is always connected to the wireless access network. In these types of networks, it is simply sufficient to note that the connection between the two devices is no longer current or active and must be re-established.

Once the user selects an item from the interaction menu generated on the wireless terminal 14, a menu selection request is sent to the multi-modal server 102 using a wireless communication protocol, such as SMS. In the first response to the request for information, a predefined callback number or address is embedded into each item on the interaction menu so that the wireless terminal 14 knows where to locate and obtain the information that is associated with each item listed in the interaction menu. In response to this selection by the user, the wireless terminal 14 establishes a connection to the multi-modal server 102 that is indicated by the predefined callback number or address. In an alternative embodiment of the present invention, the multi-modal server 102 may simply receive a short message from the wireless terminal 14 that causes the multi-modal server 102 to establish a connection with the wireless terminal 14.

After establishing a connection with the wireless terminal 14, the multi-modal callback system 100 preferentially uses a voice synthesis application 104 to generate a voice-based message that is sent to the wireless terminal 14. As set forth above, the voice-based message is based on a previous interaction between the wireless terminal 14 and the multi-modal callback system 100. This previous interaction includes a set of transmissions including, but not limited to, a text message transmitted from the multi-modal messaging system 10 to the wireless terminal 14 containing instructions to the user of the wireless terminal 14 regarding: 1) the procedure for replying to the text message, 2) the use of a special code, and 3) the resulting telephone call and/or voice communication that will be initiated by the multi-modal callback system 100.

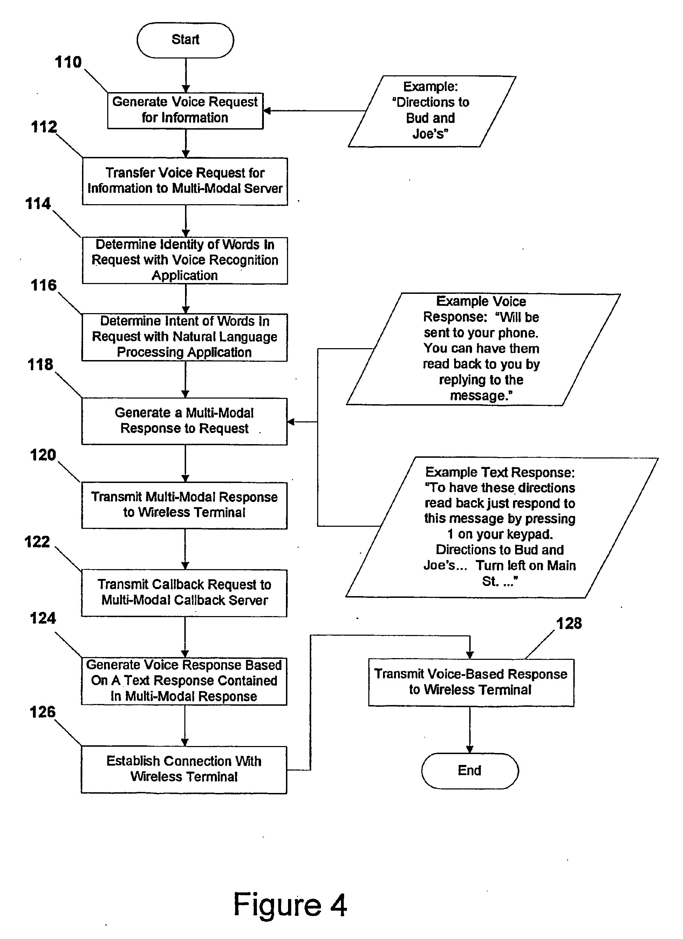

Referring to Fig. 4, an illustrative operational example of the multi-modal callback system 100 will be set forth below. At step 110, a user of wireless terminal 14 generates a voice-based request for information. Once generated, the voice-based request for information is sent to the multi-modal callback server 102, which is illustrated at step 112. In the present example, the user asks the multi-modal callback server 102 for "directions to Bud and Joe's." The request for information is received by the multi-modal server 102, which, in turn, uses automated speech processing applications to generate a response to the request for information from the user. At step 114, a voice-recognition application 22 determines the identity of the words contained in the voice-based request for information. At step 116, a natural language processing application 26 may be used to determine an intent or meaning behind the words identified by the voice-recognition application 22. It is important to note that the multi-modal callback server 102 is also capable of handling text-based requests for information that are generated by the wireless terminal 14.

As set forth above, the response that is generated by the multi-modal callback system 100 may include a voice-based response and a text-based response. The response-generation application 28 is used to generate a search query that searches the data content database 34 in order to retrieve the required information needed to generate a response, which is illustrated at step 118. In the case of a text-based request for information, the voice-recognition application 22 and the natural language processing application 26 are simply bypassed and the user's text-based request for information is used by the response-generation application 28 to generate the multi-modal response.

In our current example, the voice-based response might be as follows: "Will be sent to your phone. You can have them read back to you by replying to the message." The text-based response might be: "To have these directions read back, just respond to this message by pressing 1 on your keypad. Directions to Bud and Joe's... Turn left on Main St...." After the responses are generated, they are both transmitted to the wireless terminal 14, which is represented at step 120. Preferentially, at that point, the call or connection between the multi-modal callback server 102 and the wireless terminal 14 is terminated so that the user is no longer charged for access.

After some time has elapsed, at step 122, the user enters a callback request by selecting "1" on the keypad of the wireless terminal 14 in the present example. The callback request is then transmitted to the multi-modal callback server 102, which is illustrated at step 122. The callback request indicator may either be in an interactive menu or in the text-based response. Based on the callback request, at step 124, the multi-modal callback server 102 generates a voice-based response that is based on the text-based response that was previously sent to the wireless terminal 14 as part of the multi-modal response, which is illustrated at step 126.

At step 126, the multi-modal callback server 102 establishes a connection with the wireless terminal 14. After the connection is established with the wireless terminal 14, the voice-based response is transmitted to the wireless terminal 14, which is illustrated at step 128. As set forth above, a voice synthesis application 104 is used to generate the voice-based response. The voice synthesis application 104 is preferentially capable of converting text to speech and may contain predefined voice files that may be used as responses.

Although a voice synthesis application 104 is used to generate a voice-based response in this embodiment, the multi-modal callback server 102 may also generate a second text-based response that is also sent to the wireless terminal 14. The second text-based response may be sent instead of the voice-based response or with the voice-based response.

In yet another embodiment of the present invention, the multi-modal callback server 102 may have already sent a text-based message to the user of the wireless terminal 14. The text-based message could be pushed to the wireless terminal 14 or pulled by the wireless terminal 14, depending upon the particular circumstances. For example, a text-based message that might be pushed to the wireless terminal 14 could be "Pizza special at Joe's Pizza, which is near your location. Press 1 for directions." An interaction item is contained in the text-based message that allows the user to select an option that is presented. In this example, the user is allowed to press 1 on the keypad for directions.

If the user of the wireless terminal 14 presses 1 on the keypad, the multi-modal callback server 102 will connect with the wireless terminal 14 and audibly reproduce directions to Joe's Pizza over the wireless terminal 14 using the voice synthesis application 104. In other words, in the embodiments set forth above, the text-based message that is presented to the user is read back to the user. In this embodiment, a different message is read to the user in response to a selection of an item in the interaction menu. The message that is read to the user does not necessarily have to be the same as the text-based message that is presented to the user of the wireless terminal 14.

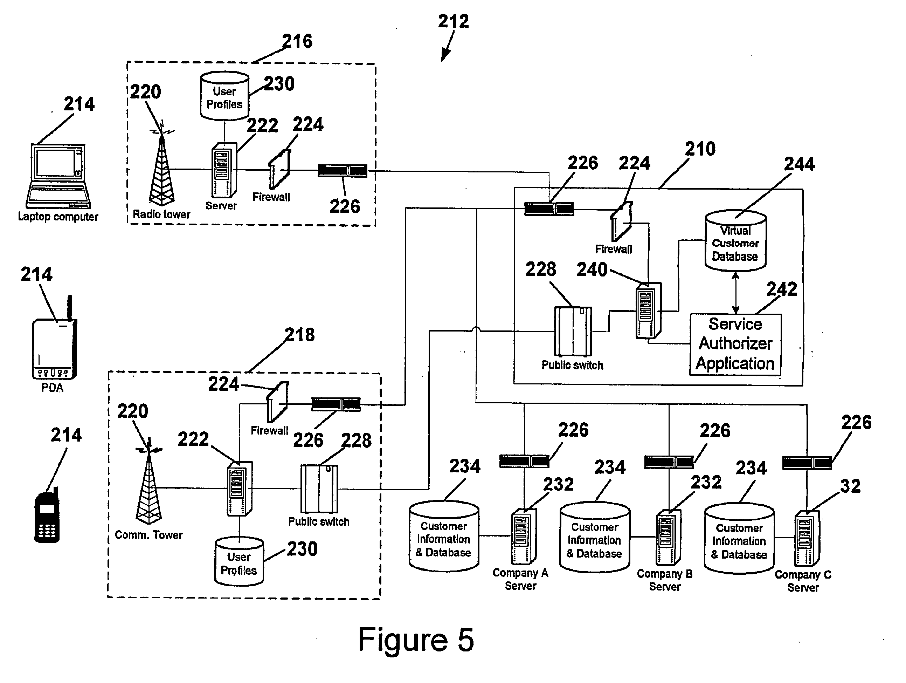

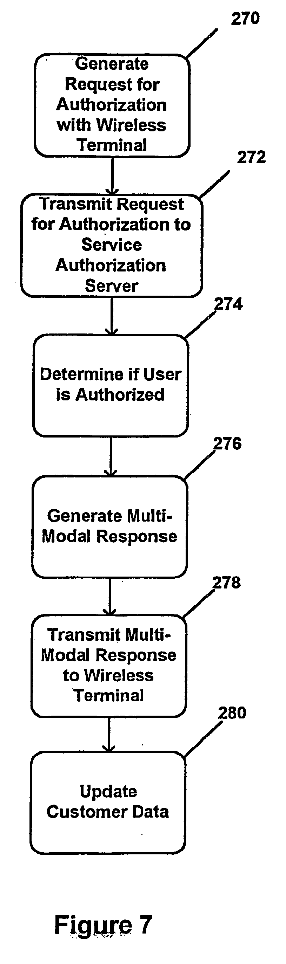

Referring to Fig. 5, an embodiment of the present invention discloses a service authorization system 210 for a wireless communication system 202. As illustrated in Fig. 5, the wireless communication system 202 may include a plurality of wireless terminals 214 that are capable of establishing connections with a plurality of wireless access networks 216, 218. The wireless access networks 216, 218 may be operated by the same wireless company or a by a different wireless company. Further, the wireless access network 216, 218 may be selected from a plurality of different types of networks such as a wireless local area network ("WLAN"), a digital wireless access network, or an all-IP digital wireless access network.

Preferentially, the service authorization system 210 is operated by a third party that is not directly related to the operators of the wireless access networks 216, 218. As set forth in detail below, the separation of relation between the companies allows multiple companies to share data files so that users of the wireless terminals 214 can receive a wide range of data services by using the wireless terminals 214. In alternative embodiments, the service authorization system 210 may be operated by the operators of the wireless access networks 216, 218. As used herein, the term data service is used broadly to refer to a plurality of different services such as web page services, email services, short-message services, voice-mail services, gaming services, file transfer services, chat services and information services (e.g., stock quotes, news, maps) to name a few.

As illustrated in Fig. 5, the first wireless access network 216 includes a base station 220 that is connected to an access network server 222. The access network server 222 may include a firewall 224 that provides security to the access network server 222. As generally known in the art, the firewall 224 acts as a security buffer between the connection that is established between the access network server 222 and a router 226. As known in the art, the router 226 transmits and receives data or packets of data to predetermined addressed destinations. Preferentially, the first wireless access network 216 is an all IP-based wireless access network.

The second wireless access network 218 also includes a base station 220 that is connected to an access network server 222. As with the previous embodiment, the access network server 222 includes a firewall 224 between the connection that is established between the access network server 222 and the router 226. As further illustrated in Fig. 5, the access network server 222 of the second wireless access network 218 is also connected to a public switch 228. As known in the art, the public switch 228 transmits and receives voice and data signals over networks to and from a respective source and destination node. In this embodiment, the access network server 222 is also capable of sending and receiving data or packets of data using a wireless communication protocol, such as short-message service or wireless application protocol ("WAP"). The data may be sent using these protocols in a wireless markup language ("WML"), HTML or as plain text.

As further illustrated in Fig. 5, the first and second wireless access networks 216, 218 include a subscriber database 230. The subscriber database 230 preferentially includes information or profiles that are relevant to each subscriber or user of the wireless access network 216, 218. Typically, each user will have a user account that is maintained in the subscriber database 230 of the wireless access network 216, 218. In a secure or multi-user network, the user account is the means by which an individual is allowed access to the wireless access network 216, 218 and its resources. Typically, the owner or operator sets up a user account that consists of information about each user. This user profile may include information such as the user's name, password, address, home telephone number, rights and permissions the user has on the network, or the types of data services the user subscribes to as it relates to the present invention.

A user profile is a computer-based record that is maintained regarding an authorized user of a multi-user network. User profiles are often used for security reasons as well as for various other reasons, such as billing. This data record can contain such information as the person's access rights, mailbox locations, type of terminal, display settings and capabilities, application settings, hobbies, areas of interest, age, marital status, gender, occupation, income range and so forth. As set forth in greater detail below, during operation, this information is gathered and used by the service authorization system 210.

As illustrated in Fig. 5, routers 226 or public switches 228 are preferentially used to interconnect various components of the service authorization system 210. Routers 226 are also used to connect the service authorization system 210 to a plurality of participating company servers 232. Although routers 226 and public switches 228 are illustrated in this embodiment, those skilled in the art should recognize that other types of networking devices could be used to interconnect the various components of the service authorization system 210. As such, the disclosure of routers 226 and public switches 228 should be viewed in an illustrative sense and not as a limitation of the present invention.

The participating company servers 232 have a company database 234 that includes a customer information database as well as a business database. The customer information database contains profile information about consumers of the companies' respective products or services. As such, the customer information database will preferentially likely contain at least the following information: a customer ID, a virtual key associated with the customer, an address, a telephone number, an email address, a work number and any other relevant data that may be associated with the consumer. The customer information database also preferentially includes a list of data services that the user is authorized to receive from the participating company server 232. The business database includes information about the companies' products or services that may be searched by using a search query.

The service authorization system 210 includes a service authorization server 240 that includes a service authorizer application 242 and a virtual customer database 244. The service authorization system 210 is capable of 1) using multiple modes of communication including those disclosed above in the Multi-Modal Messaging embodiments, and the Multi-Modal Callback embodiments; 2) methods for entering into a contractual agreement with a customer for the purpose of using the customer's proprietary data to provide tailored services; 3) methods for the sharing of customer proprietary data for the purpose of providing personalized service to a customer using a wireless communication device 214 on the wireless access networks 216, 218, which are disclosed in the Virtual Customer Database embodiments, which are set forth below; and 4) methods for acquiring digital signatures.

The service authorization system 210 is comprised of a sequence of steps for determining authorization between two parties and the process of requesting authorization and receiving a response to that request for authorization. The present invention is comprised of the sequence of operations for both push and pull scenarios, meaning the sequence can happen upon the request of a wireless terminal 214 on the wireless network 216, 218; i.e., pull, or in the push scenario, where the wireless carrier or a participating company server 232 sends a message to the customer's wireless communication device 214 without a prior request from the customer. Additionally, the present invention discloses a sequence of method steps that occur prior to or at the time a respective service is delivered or provisioned to the wireless terminal 214.

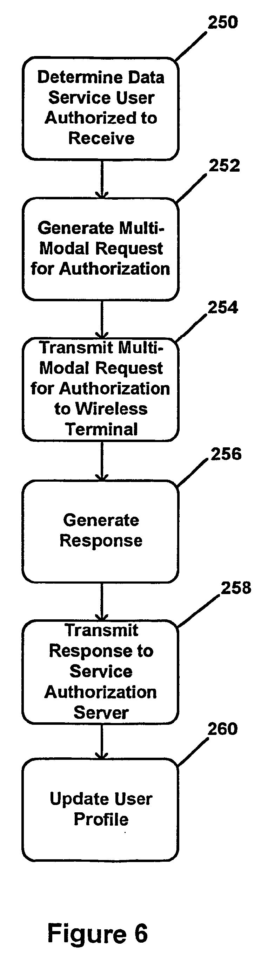

As generally set forth above, one embodiment of the service authorization system 210 discloses a method for pushing requests for authorization to receive data services to the wireless terminal 214 prior to the time that a data service is delivered. Referring to Fig. 6, in this embodiment of the present invention, the access network server 222, the service authorization server 240, or a respective participating company server 232 determines at least one data service for which an authorization request should be sent to the wireless terminal 214, which is illustrated at step 250. The access network server 222 may send a request to the service authorization server 240 that causes the service authorizer application 242 to generate a list of data services that the user is authorized to receive and are supported by the wireless access network 216, 218. In the alternative, the service authorizer application 242 or the participating company server 232 may act independently to determine data services that users of the wireless terminals 214 are allowed to access via the wireless access network 216, 218.

A method of determining the data services for which the authorization request should be sent is to retrieve the necessary information from the virtual customer database 244. The virtual customer database 244 is a distributed database of consumer information that is used for the purpose of delivering personalized data services to users of the wireless terminals 214 from a plurality of participating company servers 232. The virtual customer database 244 contains profile information about each user that contains data about the user that is supplied by the participating company servers 232. The service authorizer application 242 is capable of using the virtual customer database 244 to look up an identity that is associated with the user and obtain a list of data services that are provided by participating company servers 232 that the user is allowed to receive. The user profiles in the virtual customer database 244 will contain an indication or listing of what data services respective users are allowed to receive from the participating company servers 232, as well as a digital key and customer ID that is associated with the user for each respective data service and participating company server 232.

The service authorizer application 242 uses the user profile information associated with the wireless terminal 214, which can be provided by the wireless terminal 214 or the access network server 222, to generate a data service search query that searches the virtual customer database 244 to create a list of data services that the user is authorized to receive that have not been previously authorized by the user. After the potential data service list is generated by the service authorizer application 242, it is used by the service authorizer application 242 to generate at least one request for authorization of data services, which is illustrated at step 252. In one embodiment of the present invention, the request for authorization that is generated by the service authorizer application 242 is a multi-modal message.

At step 254, the multi-modal request for authorization is sent to the wireless access network 216, 218. The access network server 222 may modify the request for authorization of services to remove predetermined data services. The wireless access network 216, 218 then transmits the multi-modal request for authorization of data services to the wireless terminal 214. At the time the request for authorization of data services is sent to the wireless terminal 214, the subscriber of the wireless terminal 214 has not yet indicated an intent to receive these service(s), nor has the subscriber previously been sent a request for authorization of data services. As such, to the user, the process of registering and becoming authorized to receive data services from participating company servers 232 is seamless and automatic. The present embodiment eliminates the need for the user to locate and register with every data service provider from which the user is allowed to receive data services.

As set forth above, the request for authorization of data services is preferentially sent to the subscriber's wireless terminal 214 using multi-modal messaging. In one embodiment of the present invention, the multi-modal request for authorization of data services is preferentially sent to the wireless terminal 214 using a voice-based message and a text-based message. The request for authorization of data services may also include graphic images that are generated on a display of the wireless terminal 214. In other embodiments, the request for authorization of data services may be sent in any message format selected from a group of message formats including a voice-based message, a text-based message, an email message, a short message, a chat message, a video message or a voice-mail message.

The multi-modal request for authorization of data services preferentially includes a means for allowing the user to responding to the request for authorization of data services using the wireless terminal 214. Preferentially, the subscriber may respond to the request for authorization using either voice-based responses or text-based responses. The user may also respond by selecting menu options or hyperlinks that are generated on a display of the wireless terminal 214. A touch pad or pointing device (such as a mouse) may also be used to generate a response to the request for authorization of data services. As such, at step 256, the user of the wireless terminal 214 generates a response to the multi-modal request for authorization of data services. The response to the multi-modal request for authorization of data services may be generated on the wireless terminal 214 in the form of a multi-modal message in one of several different message formats.

At step 258, the user's response is transmitted to the wireless access network 216, 218, which, in turn, forwards the response to the service authorizer application 242. After the user has provided an indication of an acceptance or has declined, the user's data or profile will be updated in the virtual customer database 244 to reflect either an acceptance or rejection of the multi-modal request for authorization, which is illustrated at step 260. If the subscriber accepts the request for authorization of data services, the wireless terminal 214 will be able to begin receiving the data services for which the subscriber has accepted service from the participating company server 232. Likewise, if the subscriber rejects the request for authorization, the wireless terminal 214 will not receive the data service that is offered by that particular participating company. The wireless terminal 214 and the access network server 222 may also save the response in the profile that is associated with the user in a memory location on each respective device.

As an example, XYZ airlines may want to receive authorization from the user of the remote terminal 214 to provide a data service to the remote terminal 214. As such, the XYZ airline company server may send a text message and an email message to the remote terminal 214. The page and email message asks the user of the remote terminal 214 if XYZ airlines can provide service to the user. The remote terminal 214 gives the user the ability to respond either "yes" or "no." If the user responds "yes," then XYZ airlines can send the user flight information via the remote terminal 214 or the user can call the service and request flight information without having to provide a customer identification number. As set forth above, the service has already been authorized for the remote terminal 214.

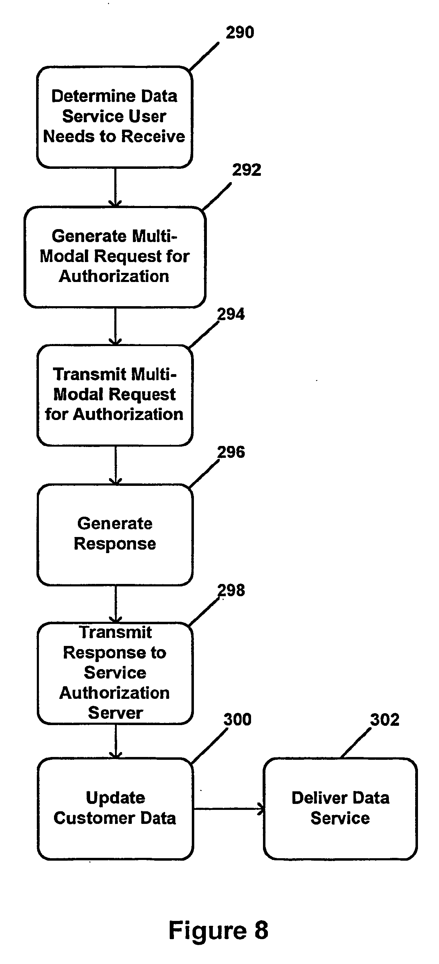

As generally set forth above, another embodiment of the service authorization system 210 discloses a method for pulling requests for authorization to receive data services prior to the time that a data service is delivered to the user of the wireless terminal 214. The sequence of operations for a pulled request prior to service is set forth below and illustrated in Fig. 7. At step 270, the user of the wireless terminal 214 generates a request for authorization of a data service using the wireless terminal 214. The wireless terminal 214 may generate this request by calling a predetermined telephone number to establish a connection or by accessing a web page generated by the service authorization server 240 that contains a list of data services. The user of the remote terminal 214 may also access a participating companies' web page. In essence, the difference between this embodiment and the previous embodiment is that the authorization process is initiated by the user and not the service authorization system 210. At the time the request is sent, the user has not yet indicated an intent to participate in the respective data service(s), nor has the subscriber previously been sent an authorization request.

Unlike the previous embodiment in which the authorization request is pushed to the wireless terminal 214, in this embodiment of the present invention, the wireless terminal 214 is used to generate the request for authorization. After the request for authorization is generated by the wireless terminal 214, it is transmitted to the wireless access network 216, 118, which, in turn, transmits the request for authorization to the service authorizer application 242 located on the service authorization server 240, which is illustrated at step 272.

Once the service authorization server 240 receives the request for authorization, the service authorizer application 242 then determines if the user of the wireless terminal 214 is authorized to receive the particular data service for which the request for authorization identifies, which is illustrated at step 274. To determine if the user of the wireless terminal 214 is authorized to receive the particular data service for which the request for authorization has identified, the service authorization application 242 preferentially uses the virtual customer database 244. A search query is generated by the service authorization application 242 that uses the identity of the user of the wireless terminal 214 to identify the data services that the user of the wireless terminal 214 is authorized to receive. Likely, the services for which the user would be approved to receive would be from participating companies that are providing services to the user. However, some companies may authorize any user to receive their respective data services, either for free or on a fee-based system.

After the service authorizer application 242 has determined that the user is authorized to receive the data service, the service authorizer application 242 generates a multi-modal response to the request for authorization, which is illustrated at step 276. In this embodiment, the multi-modal response includes a voice-based message and a text-based message. At step 278, the multi-modal response is transmitted to the wireless terminal 214. The user's profile in the virtual customer database 244 and, most likely, the user profile on the access network server 222, would also be updated to reflect the authorization of that particular data service, which is illustrated at step 280.

As an example, the user of the remote terminal 214 wants to receive data services from XYZ airlines. The user of the remote terminal 214 calls XYZ airlines and receives a prompt that allows the user to register with the data service. At that time, the service authorization server 240 can generate a voice-based message and a text-based message that is sent to the remote terminal 214. The voice-based message may be a question and the text-based message may tell the user how to respond to the question using the remote terminal 214. Once the user has been authorized, the remote terminal 214 will be able to receive data services from XYZ airlines without having to enter any special identifiers or customer numbers. The remote terminal 214 is already authorized to receive the data services.

Referring to Fig. 8, yet another embodiment of the present invention discloses a service authorization system 210 capable of generating a pushed authorization request at the time of service. At step 290, the access network server 222, the service authorization server 240 or a respective participating company server 232 determines that a respective data service needs to be delivered to the user via the user's wireless terminal 214. The data service determination may be made based on the occurrence of a predetermined event. For instance, if the user is taking a flight and the flight is delayed, the participating airline company may want to notify the user of the delay using the wireless terminal 214. However, the user may not have authorized the airline company to send this type of data alert to the user's remote terminal 214. This embodiment allows the airline company to obtain authorization at the time the data service needs to be delivered to the remote terminal 214.

After the data service for which a request for authorization should be generated is determined or the predetermined event occurs, the service authorizer application 242 generates a multi-modal request for authorization, which is illustrated at step 292. The multi-modal request for authorization is then sent to the user's remote terminal 214, which is illustrated at step 294. In our present example, the remote terminal 214 might receive a call from the service authorization server 240 that contains a voice-based message stating that the party indicated in the text-based message listed below is requesting authorization to provide data services to the remote terminal 214. The text-based message might contain the name and address of the airline company as well as any other relevant information the user might need to be provided. The voice-based message or the text-based message may also include an indication that the airline company has important information that needs to be provided to the user at that particular time. At the time the authorization request is sent, the user has preferentially not yet indicated the intent to participate in this data service, nor has the user previously been sent an authorization request.

The multi-modal request for authorization also includes a means for allowing the user to accept or decline to receive the data service identified by the multi-modal request for authorization. At step 296, the user generates a response to the multi-modal request for authorization using the wireless terminal 214. The response is then transmitted by the wireless terminal 214 to the service authorization server 240, which is illustrated at step 298. The response may be a multi-modal response message in some embodiments of the present invention.

After the user has indicated acceptance or has declined, the subscriber's customer proprietary data or profile in the virtual customer database 244 will be updated, which is illustrated at step 300. If the user accepts, an indication of this acceptance will be placed in the virtual customer database 244 as well as other data, such as a digital key associated with the user and the respective company, which may be needed for future use. If the user declines, an indication of the user's non-acceptance will also be placed in the virtual customer database 244 so that the user is no longer sent any notices from the respective data service provider that is identified in the request for authorization.

At step 300, after the user has authorized the data service to be received on the wireless terminal 214, the data services are delivered immediately, or as soon as is technically reasonable, to the wireless terminal 214. In our present example, if the user authorizes the participating airline company to send data services to the remote terminal 214, the notice of the delay can be sent to the wireless terminal 214, preferentially using a multi-modal message. For example, the user may receive a text-based message on the wireless terminal 214 that indicates the delay as well as a voice mail message or email message. The email may include a URL for the user to log into a website to reschedule the flight, for example.

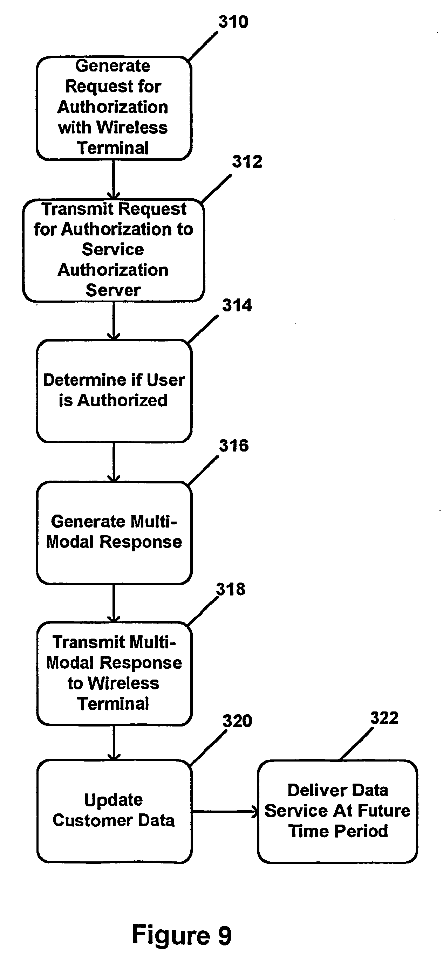

Referring to Fig. 9, the sequence of operations for a pulled request prior to service is set forth below. The steps performed in this embodiment are very similar to those for a pushed request at the time of service with the only difference being the request for authorization occurs prior to the delivery of the data service and the content of the authorization request indicates service will be delivered at a future time and/or date. At step 310, the user of the wireless terminal 214 generates a request for authorization to receive a data service offered by a participating company server 232 at a future time period with the wireless terminal 214. The wireless terminal 214 may generate this request by calling a predetermined telephone number to establish a connection or by accessing a web page generated by the service authorization server 240 that contains a list of data services.

Unlike the previous embodiment in which the authorization request is pushed to the wireless terminal 214, in this embodiment of the present invention, the wireless terminal 214 is used to generate the request for authorization for the data service at the future time period. After the request for authorization is generated by the wireless terminal 214, it is transmitted to the wireless access network 216, 218, which, in turn, transmits the request for authorization to the service authorizer application 242 located on the service authorization server 240, which is illustrated at step 312.

Once the service authorization server 240 receives the request for authorization, the service authorizer application 242 determines if the user of the wireless terminal 214 is authorized to receive the particular data service for which the request for authorization identifies, which is illustrated at step 314. To determine if the user of the wireless terminal 214 is authorized to receive the particular data service for which the request for authorization has identified, the service authorization application 242 uses the virtual customer database 244. A search query is generated by the service authorization application 242 that uses the identity of the user of the wireless terminal 214 to identify the types of data services that the user of the wireless terminal 214 is approved to receive. Likely, the services for which the user would be approved to receive would be from participating companies that are providing data services to the user. However, some companies may authorize any user to receive their respective data services either for free or on a fee-based system.

After the service authorizer application 242 has determined that the user is authorized to receive the data service, the service authorizer application 242 generates a multi-modal response to the request for authorization for data service at the future time period, which is illustrated at step 316. In this embodiment, the multi-modal response includes a voice-based message and a text-based message, but other messages may be used as well. At step 318, the multi-modal response is transmitted to the wireless terminal 214. The multi-modal response preferentially also includes a confirmation that the requested data service will be delivered to the wireless terminal 14 at the future time period.

The user's profile in the virtual customer database 244 and, most likely, the user profile associated with the access network server 222, would also be updated to reflect the authorization of that particular data service, which is illustrated at step 320. At step 322, which occurs at the future time period, the data service is delivered by a participating company server 232 to the wireless terminal 214.

For example, the user can register with an airline to receive notifications about his/her itinerary. The user registers for the service well before the flight plans are made. Then, when the flight plans are made, the service will use the authorization to automatically send itinerary information to the customer's remote terminal 214 one or two hours before the flight. Or, the customer can call the system and request the itinerary at any time and they will not need to reregister for the service.

The present invention includes the methods described here where the authorization request contains a request for the use of the customer's proprietary data for a single transaction, or for the use of the data for the duration of the established business relationship between the carrier and user so long as the user is receiving necessary related data services such as a wireless telephone service with text messaging. This invention includes these methods where the services being delivered are services originated by an affiliate of the carrier.

Another embodiment of the present invention discloses methods and systems for creating and utilizing a distributed database of customer information. The distributed database may be used to deliver personalized services to consumers using electronic communication channels. The distributed database is enabled through a loose association of customer specific information from participating businesses that may include companies, content providers, etc. in order to enable broad profiles of consumers. The customer specific information of each participating business may be securely maintained by that participating business, but may be enabled for real-time external access by consumers using a virtual customer database system. Accordingly, broad consumer profiles may be created within the virtual customer database system without requiring disclosure to third parties and/or direct sharing of consumer information between participating businesses.

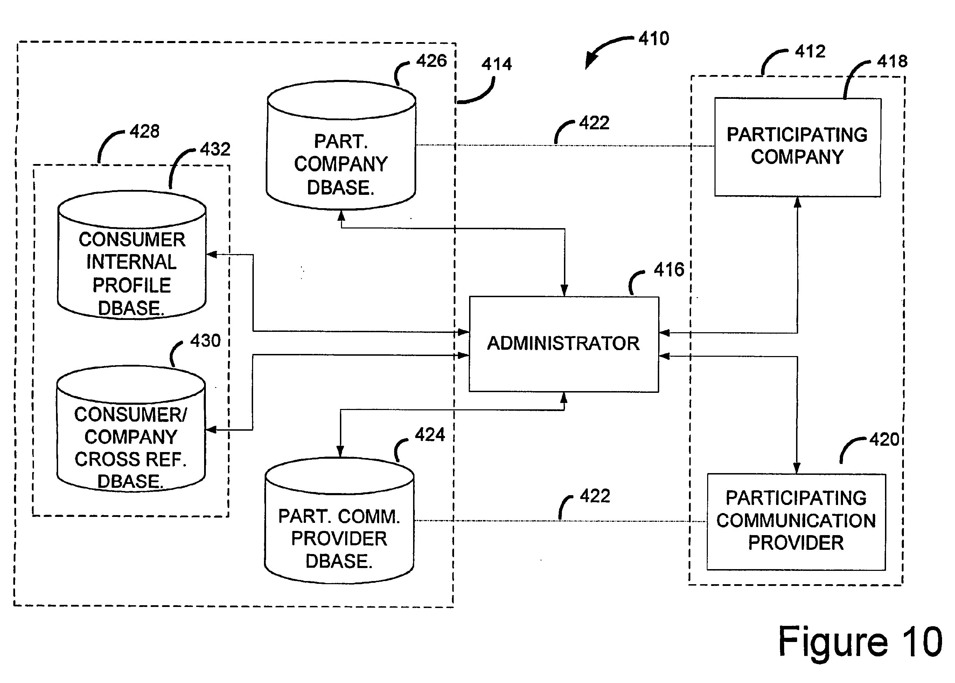

Fig. 10 is a block diagram illustrating one example of a virtual customer database (VCDB) system 410. The VCDB system 410 includes a plurality of participating businesses 412, a distributed database 414 and an administrator 416 coupled as illustrated. As used herein, the term "coupled," "connected," or "interconnected" may mean electrically coupled, optically coupled, wirelessly coupled and/or any other form of coupling providing an interface between systems, devices and/or components.

The participating businesses 412 represent information-based systems of businesses providing goods and/or services to consumers. The information-based systems may include customer data storage systems, data retrieval systems, communication systems and/or any other systems supporting customer recordkeeping related to the supply of goods and/or services. The data stored in such systems may include any form of customer specific data related to providing goods and/or services to each consumer. Typically, the participating businesses 412 are protected from unauthorized access by a firewall or other security measures.

As used herein, the term "consumer" refers to users of the VCDB system 410 for personalized services. The term "customer" on the other hand, refers to information and services related to consumption/utilization of goods and/or services by such consumers.

In the illustrated example, the participating businesses 412 may include at least one participating company 418 and at least one participating communication provider 420. The participating company 418 may be any independent company, such as, for example, an airline company, a manufacturing company, a utility company or any other business providing goods and/or services to consumers. The participating communication provider 420 may be any business providing communication services to consumers, such as, for example, a wireless phone service provider, a wireline phone service provider, a paging service provider, an email service provider, an interactive messaging provider, an Internet access provider or any other provider of communication services over electronic communication channels. In other examples any number of participating companies and participating communication providers may be included in the participating businesses 412 of the VCDB system 410.

The distributed database 414 may include one or more secure databases accessible by one or more database management systems (DBMS). The presently preferred distributed database 414 includes separate, secure, participating business databases for each of the participating businesses 412. The participating business databases may each include customer specific information extracted from associated participating businesses 412. As illustrated by dashed lines 422 in Fig. 10, a first database identified as a participating communication provider database 424 is preferably associated with the participating communication provider 420. In addition, a second database identified as a participating company database 426 is preferably associated with the participating company 418. Alternatively, the participating communication provider database 424 and the participating company database 426 may be included along with any other participating businesses 412 in a common secure database. Within the common secure database, passwords or other security measures may be used to limit access to the different areas of the database pertaining to each of the participating businesses 412.

The distributed database 414 may also include a third database identified as a shared participant database 428. The shared participant database 428 is at least one database common to all of the participating businesses 412. Non-sensitive information related to each of the participating businesses 412 may be included in the shared participant database 428. In addition, administrative and operating information related to the VCDB system 410 may be included in the shared participant database 428. For example, account information related to consumers subscribing to the personalized services of the VCDB system 410, consumer utilization information, consumer customization of personalized services and/or any other consumer information related to the VCDB system 410 may be included.

The shared participant database 428 of the illustrated example includes a consumer/company cross-reference database 430 cooperatively operating with a consumer internal profile database 432. The shared participant database 428 may include non-sensitive general information related to each of the participating businesses 412. In addition, the shared participant database 428 may include consumer specific information for each consumer. The shared participant database 428 may also include any other information related to operation of the VCDB system 410 in providing personalized services to consumers. The consumer/company cross-reference database 430 and the consumer internal profile database 432 may be collocated in the same database, or may be two separate databases operating on the same, or different, hardware platforms.

The consumer/company cross reference database 430 may include information to cross-reference each of the participating businesses 412 to corresponding consumers utilizing the VCDB system 410. Consumers utilizing goods and services of the participating businesses 412 may be cross-referenced to corresponding company IDs within the shared participant database 428. The company IDs may be the name of the company from which the information was extracted, a code representing the company and/or any other form of unique identifier. In addition, the consumer/company cross reference database 430 may include any other information pertaining to associating consumers with the participating businesses 412.

The consumer internal profile database 432 may include information related to each consumer enabled to utilize the VCDB system 410. The consumer-related information may be selectively associated with individual company IDs and may include a consumer's name and address (past and present) as well as consumer specific contact information and pre-determined contact parameters. The consumer specific contact information may identify electronic communication channels for delivery of personalized services based on the predetermined contact parameters. The electronic communication channels may be identified by associating communication device(s) of each consumer with company ID(s) of the participating communication provider(s) 420. The predetermined contact parameters may include, for example, time period designations, content designations, originator designations, preference rankings or any other considerations related to utilization of the contact information.

For example, the consumer specific contact information may indicate three electronic communication channels utilized by a wireless phone, a pager and a PDA, each serviced by a different one of the participating businesses 412 identified with a company ID. In addition, predetermined contact parameters may identify the pager as the first choice for daytime delivery of personalized services and the wireless phone as the first choice for nighttime delivery. Further, the pager may be identified to receive text messages from one of the participating businesses 412 while the PDA may be identified to receive multimedia messages from another of the participating businesses 412.

In addition, the consumer internal profile database 432 may also include consumer verification data. The consumer verification data may be provided during and/or following subscription to the VCDB system 410 for personalized services. Verification of consent by the consumer, and/or the participating businesses 412, to the release and use of consumer/customer information that may be needed to process requests may be provided by the consumer verification data. In addition, verification may involve determining the level of personalized services within the VCDB system 410 a consumer has purchased. Further, any other consumer specific information may be included within the consumer internal profile database 432.

The separate secure databases of the distributed database 414 may be located remotely or locally. Preferably, the participating communication provider database 424 and the participating company database 426 reside remotely within the firewalls of the corresponding participating businesses 412. The databases may be enabled for external access via technologies such as, for example, extensible markup language (XML), simple object (SOAP), common object request broker architecture (CORBA), hypertext transfer protocol (HTTP), hypertext markup language (HTML), remote message interface (RMI), Internet inter object request broker (ORB) protocol (IIOP) and/or any other proprietary/non-proprietary interface technologies. Alternatively, the participating communication provider database 424 and the participating company database 426 may be collocated locally with the shared participant database 428, the administrator 416 and/or themselves.

The administrator 416 may be one or more applications operating to oversee and direct operation of the VCDB system 410. Operation of the administrator 416 may occur on one or more server computers or other devices capable of communication with the participating businesses 412 and the distributed database 414. In general, the administrator 416 maintains the VCDB system 410 and acts as an interface to deliver personalized services to a consumer over electronic communication channels.

Two types of services may be leveraged with the VCDB system 410 using the administrator 416. The first type of services is pull services where content is provided based on incoming requests from consumers for customer specific information. Examples of pull services requests may include requests for an airline itinerary, a bank statement, an order status, a service schedule or any other customer specific information related to goods and/or services purchased by a consumer. The requests may be forwarded over electronic communication channels from wireless or wireline communication devices operated by consumers. The administrator 416 may receive such requests and utilize the distributed database 414 to authorize and format such requests with customer specific information. The formatted requests may then be forwarded to the appropriate participating business within the participating businesses 412. Based on the request, a response that includes customer specific information may be provided to the consumer who originated the request.

The second type of services is push services where content is provided to consumers based on incoming requests initiated by an external event and/or predetermined preferences of a consumer. Examples of push services requests may include requests for notification of consumer(s) regarding a delayed airline flight, a checking account overdraft, non-payment of a bill, backordered goods/services that are now available, or any other personalized notification related to the provision of goods and services by the participating businesses 412. Such requests may be received, authorized, formatted and forwarded by the administrator 416 to the identified consumer. The requests may be forwarded over an electronic communication channel to a communication device, such as, for example, a wireless communication device. The electronic communication channels may be selected based on predetermined instructions from the consumers.

Any participating business desiring interactions with customers via electronic communication channels may utilize the VCDB system 410. Since requests for pull services are handled by the VCDB system 410, incoming requests from consumers need not include sensitive customer specific information. In addition, incoming requests for push services for consumer notification need not include sensitive destination address information. Further sensitive customer information may remain with each of the participating businesses 412 within associated separate secure databases. Accordingly, customer information may remain within the "four walls" of each participating business that is collecting and using such information to provide goods and/or services. Utilizing the distributed database 414 and the administrator 416, however, personalized customer information and other services may be enabled for real-time secure external access by consumers via a common interface standard.

As used herein, the term "sensitive information" pertains to information considered by a consumer to be private and/or personal. In addition, "sensitive information" includes information considered by any of the participating businesses 412 to be confidential, proprietary and/or would otherwise provide a competitive advantage to competitors.

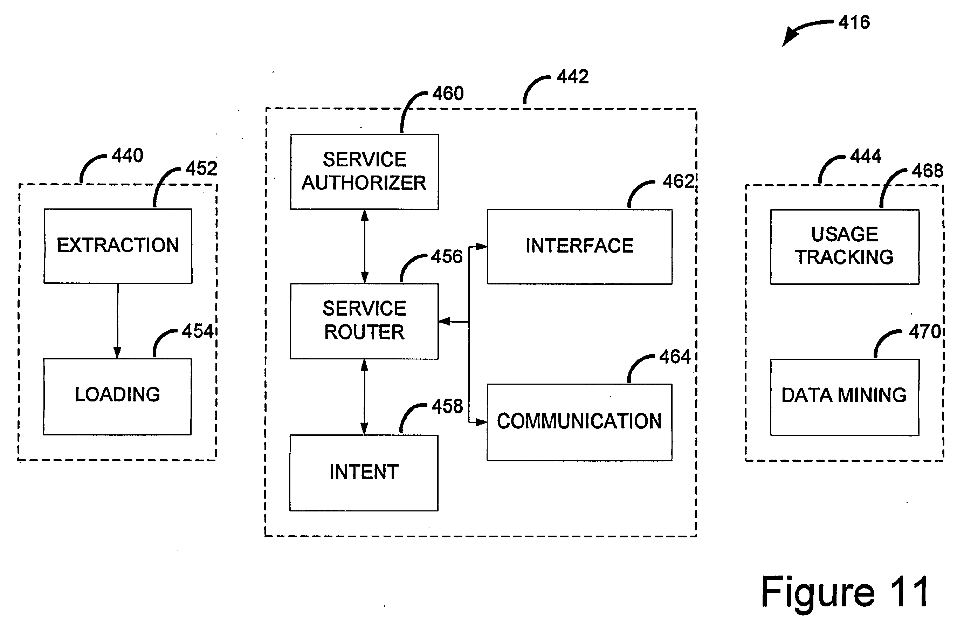

Fig. 11 is an example block diagram illustrating the functionality of the administrator 416 depicted in Fig. 10. The administrator 416 includes a load and scrub processing module 440, a request-handling module 442 and a transaction-monitoring module 444. In other examples, fewer or more modules may be illustrated to depict the functionality of the administrator 416.

The load and scrub processing module 440 includes an extraction component 452 and a loading component 454 cooperatively operating as illustrated. In general, the load and scrub processing module 440 directs the extraction and selective distribution within the distributed database 414 (Fig. 10) of customer information from the participating businesses 412 (Fig. 10). The term "load" refers to the insertion of records within the separate secure databases of the distributed database 414. The term "scrub" refers to the selective allocation of information to separate (or "scrub") sensitive information from non-sensitive information. The load and scrub processing module 440 may also include additional functionality such as, for example, data verification, removal of duplications, resolution of nicknames, misspellings, maiden/married name mapping, resolution of address spelling variants (e.g., "Cooper Lake Dr." and "Cooperlake Dr." or "Rain Tree Road" and "Rain Tree Rd.") or any other processes related to selective data distribution within the distributed database 414.

Referring now to Figs. 10 and 11, extraction of the customer information is performed with the extraction component 452. The extraction component 452 may communicate with each of the participating businesses 412 to obtain an extract of customer information. Each extract represents the customer information of one of the participating businesses 412, and may be identified with a corresponding company ID. The company ID may be provided along with the extracted customer information from each of the participating businesses 412. Alternatively, the extraction component 452 may be capable of identifying each of the participating businesses 412 and assigning the appropriate company ID. In another alternative, the extraction component 452 may cross reference the company name or other identifying information obtained in the extract with the shared participant database 428, or any other database, to identify the company ID.

The extract may include a customer name and a customer address associated with an internal customer ID. In addition, where the participating businesses 412 are a participating communication provider 420, enabled communication channel(s) may also be included in the extract. The customer name and address represent each customer of one of the participating businesses 412. The internal customer ID is an identifier to uniquely identify each customer, such as, for example, an account number, a frequent flier number (for an airline company) or any other way of uniquely identifying customers within a business' recordkeeping system.

The enabled communication channel(s) identify electronic communication channel(s) and device address(es) supported by the participating communication provider 420 for contacting the corresponding customer. For example, for a given customer, the enabled electronic communication channels may include device addresses for an instant messaging address, an email address and a wireless phone number. In addition, any other information associated with uniquely identifying the communication channel(s) and corresponding device address(es) for a customer may be included in the extract. Any other customer-related information may also be included in the extract, such as preferences for which method used to contact, schedules corresponding to which method of contact to use, length of message the device can receive (e.g., some mobile phones only accept 55 characters, some accept 255 characters).

Following extraction, the information within the extract may be compared by the extraction component 452 to a list of subscribing consumers. The list of subscribing consumers may be a listing of individuals currently enabled to utilize the VCDB system 410 for personalized services. Each entry in the listing of subscribing consumers may include a virtual key associated with the name(s) and current/past addresses of the individual. Alternatively, the virtual key may be associated with any other information indicative of the identity of a consumer that may be compared and selectively matched to the extracted information.

The virtual key may be a unique hash code or other similar unique identifier that is a universal but anonymous identifier uniquely representing each consumer utilizing the personalized services of the VCDB system 410.

The extraction component 452 may query the consumer internal profile database 432 for the list of subscribing consumers. Alternatively, the extraction component 452 may maintain the list of subscribing consumers. In still other alternatives, the list of subscribing consumers may be stored elsewhere and accessed by the extraction component 452. The extraction component 452 may use the list of subscribing consumers to determine potential matches with the customer information contained in the extract. For each properly identified consumer in the extract, the extraction component 452 may associate the virtual key of the identified consumer with the corresponding customer information and activate the loading component 454.

The loading component 454 may selectively load information from the extract along with the associated virtual keys into the distributed database 414. The information may be selectively utilized by the loading component 454 to generate records that are inserted into one or more of the secure databases within the distributed database 414. The records generated by the loading component 454 may include public customer records and private customer records. Public customer records may include customer information of participating businesses 412 which is not sensitive or otherwise deemed confidential by the participating businesses 412. Private customer records, on the other hand, may include sensitive customer information.

Referring again to Figs. 10 and 11, the loading component 454 may insert a public customer record into the consumer/company cross-reference database 430 for each properly identified customer in the extract. The public customer record inserted by the loading component 454 may include the virtual key of the consumer associated with the company ID identified in the extract. Alternatively, any other data for cross-referencing the consumer to one of the participating businesses 412 from which customer information was extracted may be part of the public customer record.

In addition to loading public customer records, the loading component 454 may also load private customer records of properly identified consumers into the distributed database 414. The company ID associated with the extract may preferably be used to determine which secure database(s) within the distributed database 414 are loaded with private customer records. In addition, the company ID may preferably be used to determine the information content of the private customer records. Other factors, such as, other participating businesses, consumer preferences or any other parameters may also be included in the information content determination.

In the example illustrated in Fig. 10, if the extract was from the participating communication provider 420, the loading component 454 may generate and insert private customer records in the participating communication provider database 424. Based on the company ID of the participating communication provider 420, the private customer records preferably include the virtual key associated with the internal customer ID of each customer of the participating communications provider 420, along with the enabled communication channel(s). In addition, the company ID may be included in private customer records. The company ID may be included where the customer information in the participating communication provider database 424 includes information from multiple participating businesses 412.

If, on the other hand, the extract was from a participating company 418, for each properly identified customer, a private customer record may be generated and inserted in the participating company database 426. In this case, based on the company ID, the private customer record may include the virtual key associated with the internal customer ID for each customer of the participating company 418. Similar to the participating communication provider database 424, the company ID may also be include where information from multiple participating businesses 412 is included in the same participating company database 426.

Processing with the load and scrub processing module 440 may be repeated for each of the participating businesses 412. With the customer information extracted, scrubbed and loaded by the load and scrub processing module 440, the VCDB system 410 may utilize the distributed database 414 to provide personalized services. Personalized services may be provided in response to requests forwarded to the request-handling module 442.

Referring again to Fig. 11, the request-handling module 442 of the illustrated example includes a service router component 456, an intent component 458, a service authorizer component 460, an interface component 462 and a communication component 464 cooperatively operating as illustrated. The request-handling module 442 receives and processes requests for push and pull services. In addition, responses to requests may be formatted and forwarded by the request-handling module 442.

As previously discussed, requests originating from consumers may be addressed by the pull services of the VCDB system 410 (Fig. 10). Consumers may initiate requests via an electronic communication channel using, for example, a wireless communication device. Electronic communication channels may include, for example, short message service (SMS), two-way text, voice-interface to a voice recognition system, interactive messaging, a chat-system or any other mechanism for initiating a request. Alternatively, any other form of access channel may be used with wireless or wireline communication devices.

Requests over an electronic communication channel may also originate from an external event or preferences of the consumer as part of push services provided by the VCDB system 410 (Fig. 10). Such requests may originate from one of the participating businesses 412 (Fig. 10), in the form of, for example, information manually entered via a website and/or based on an automated request process triggered by events/data within the participating business. In addition, email messages, HTTP requests, or any other form of request for push services may be sent to the request-handling module 442. Such requests are received and processed by the service router component 456.

Referring once again to Figs. 10 and 11, the service router component 456 receives requests and initiates queries of the distributed database 414 based on the requests. In addition, the service router component 456 activates the other components in the request-handling module 442 to process the requests. The service router component 456 may also perform other functions such as, for example, initiating and/or maintaining secure connections, such as, secure socket layer (SSL) communication with other devices in the VCDB system 410, maintenance of the secure databases and/or any other operationally related functionality of the VCDB system 410.

The service router component 456 may also process a request to identify an electronic communication channel for messages responsive to the request. An electronic communication channel identified in the request may be designated for messages responsive to the request. Alternatively, the electronic communication channel for responses may default to the channel from which the request was received. In another alternative, the service router component 456 may query the consumer internal profile database 432 to determine a consumer-designated electronic communication channel. In still other alternatives, any and/or all of the previously discussed channel identification mechanisms may be available.

Upon receipt of a request for pull services from a consumer, the service router component 456 may activate the intent component 458. The intent component 458 determines the nature of the request for pull services. Determination of the nature, or intent, of the request may allow identification of the company ID of the participating business 412 to which the request should be directed. The intent component 458 may utilize techniques such as, for example, natural language processing, keyword triggering processing, pre-defined menu choices and/or any other analysis mechanism for determining the intent of the request. Natural language processing allows a request in free-text, such as, for example, "What are the details of my flight?" With keyword trigger processing, pre-defined keywords may be identified in the request, such as, for example, "Itinerary." Pre-defined menu choices allow a choice from a list of pre-determined menu options.

Activation of the service authorizer component 460 by the service router component 456 may occur when requests for push and/or pull services are received. The service authorizer component 460 performs an authorization process. The authorization process may determine if the originator of the request has the necessary authorization level to make such a request.

Determination of the authorization level may involve verification of consent for the release and use of any customer information that may be needed to process and provide a response to the request. In addition, the level of access granted to individual consumers to obtain information from one of the participating businesses 412 responsive to requests may be determined. Further, verification may involve determining the level of personalized services to which a consumer has subscribed or agrees to subscribe. One such authorization level verification process for wireless communications device is disclosed by the Service Authorizer embodiment set forth above.

The service authorizer component 460 may determine the authorization level based on the individual consumer making requests for pull services or intended to receive customer notification based on a request for push services. Upon receipt of a request, the service authorizer component 460 may access the consumer internal profile database 432 to verify the authorization level. The virtual key along with one of the participating businesses 412 identified by the intent component 458 may be utilized during the verification process. Alternatively, the service authorizer component 460 may include authorization level information, and/or may access any other database(s) containing such information.

The interface component 462 provides an interface to the participating businesses 412 for sending and receiving data and commands. Interfacing with the participating businesses 412 may involve formatting the request with, for example, proprietary communication protocols, HTTP, SOAP, IIOP, modem communications or any other communication protocol. In addition, interfacing may involve formatting the request in, for example, SQL, SOAP, CORBA, HTML, XML, RMI, C++, Cobol, text messages or any other format compatible with the participating businesses 412. The interface component 462 may include a plurality of interface sub-components..Each of the interface sub-components may provide an interface to one of the participating businesses 412. Accordingly, requests for pull services may be directed to a particular interface sub-component based on the identity of the participating business by the intent component 458.

The interface component 462 may similarly receive and format responses from the participating businesses 412. The responses may be provided by the participating businesses 412 in response to requests for pull services from consumers. In addition, requests for push services may be provided to the VCDB system 410 via the interface component 462.

The communication component 464 may provide the mode(s) of communication for messages to and from the consumer communication devices based on identification of the electronic communication channel. Messages may include responses to request for pull services as well as customer notifications resulting from requests for push services. The communication component 464 may also place the messages on the identified electronic communication channel.

Providing the communication mode may involve, for example, creating text messages, alarms, video messages, audio messages and/or any other mechanism for conveying information based on identification of the return electronic communication channel. In addition, providing the communication mode may include protocol modification/changes, information presentation changes and/or other modifications/changes, based on the return electronic communication channel. One example technique for formatting a message in both text and/or audio messages during the course of a single interaction is described in the Multi-Modal Messaging embodiment, which is set forth above. Alternatively, the communication component 464 may provide an interpretation and/or conversion function for both incoming requests from communication devices, as well as outgoing responses.

Referring once again to Fig. 11, the administrator 416 of the illustrated example also includes the transaction-monitoring module 444. In other examples, the transaction-monitoring module 444 may not be included in the administrator 416. The illustrated transaction-monitoring module 444 includes a usage-tracking component 468 and a data-mining component 470.

The usage-tracking component 468 may create an electronic record related to the processing of each request by the request-handling module 442. The electronic records may be stored in the shared participant database 428 (Fig. 10). Alternatively, electronic records for the participating businesses 412 (Fig. 10) or groups of participating businesses 412 may be stored in the participating communication provider database 424 (Fig. 10), the company database 426 (Fig. 10), a dedicated database (not shown) and/or any other location within the VCDB system 410 (Fig. 10).

When the request is for pull services, for example, the electronic record may include the virtual key of the relevant consumer, the date/time of the request and/or the response, the intent of the request and the parameters of the request. In addition, the electronic record may include the company ID responding to the request, parameters of the response, the communication channel used for the request and the communication channel used for the response.

Similarly, when the request is for push services, the virtual key, the company ID, the date/time of the request and the communication channel may be included in an electronic record. Alternatively, the virtual key of the relevant individual may not be maintained in the electronic records. Instead, the electronic records of transactions may be fully anonymous from the consumer perspective. In addition, the company ID may be replaced with a company group ID to maintain anonymity of the participating businesses 412 (Fig. 10).

Referring once more to Figs. 10 and 11, the data-mining component 470 may gather and process statistical data related to operation of the VCDB system 410. Operationally related data may be provided to the data-mining component 470 during operation of the VCDB system 410. The data-mining component 470 may be used to support the usage-tracking component 468 in gathering statistical data. Varying degrees of data mining with the data-mining component 470 may be used to determine, for example, how individual consumers and/or demographic categories of consumers are leveraging the supported personalized services of the VCDB system 410.

For example, demographic characteristics may be included in the consumer internal profile database 432. Transaction record data collected by the usage-tracking component 468 may then be mined by the data-mining component 470 based on the demographic characteristics. Any other operational data may also be gathered and processed by the data-mining component 470.

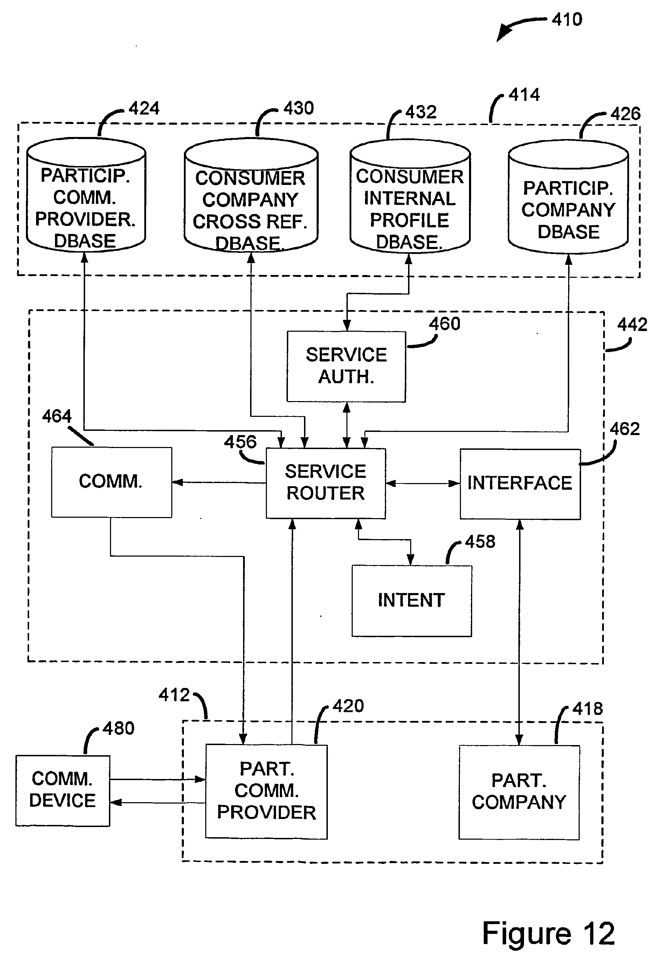

Fig. 12 is a block diagram of an example the VCDB system 410 that may engage in push and/or pull services. In the illustrated example, the VCDB system 410 includes the participating businesses 412, the distributed database 414 and the request-handling module 442 operatively coupled as illustrated. In addition, at least one communication device 480 is depicted in the illustrated example as coupled with the participating businesses 412. The communication device 480 may be a wireless device and/or a wireline device. In the presently preferred embodiments, the communication device 480 is a wireless communication device.

The participating businesses 412 include at least one participating company 418 and at least one participating communication provider 420 similar to the previously discussed examples. In addition, the distributed database 414 is depicted as including the participating communication provider database 424, the participating company database 426, the consumer/company cross-reference database 430 and the consumer internal profile database 432. The request-handling module 442 includes the previously discussed service router component 456, the intent component 458, the service authorizer component 460, the interface component 462 and the communication component 464.

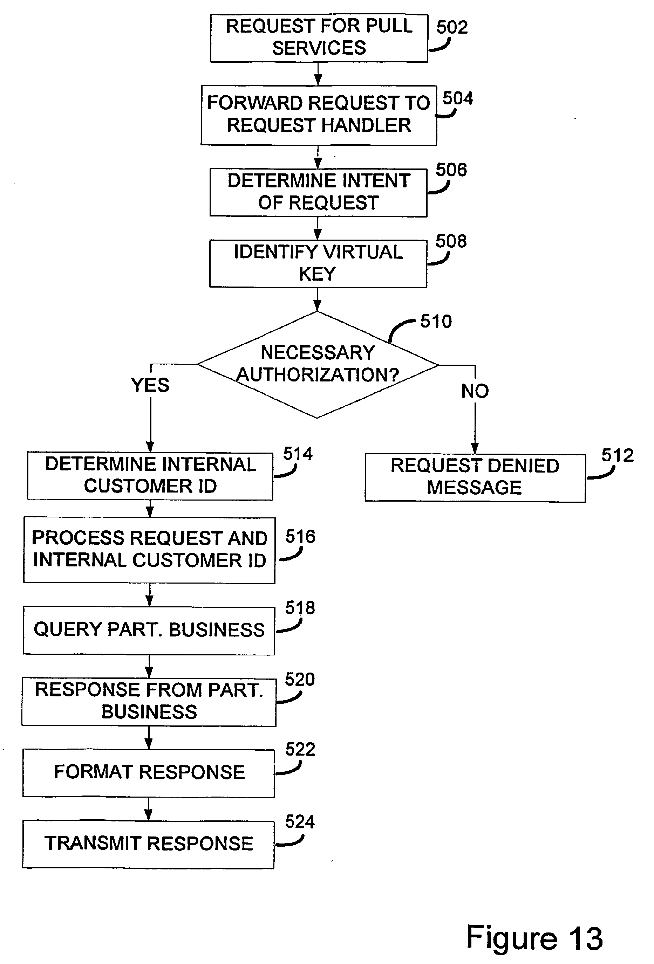

Referring now to the flow diagram of Fig. 13, an operational example of the VCDB system 410 illustrated in Fig. 12 will be explained when a request for pull services is received by the VCDB system 410. In this operational example, the previously discussed load and scrub processes have already occurred such that the VCDB system 410 is populated with data. The operation begins at block 502, where a request for pull services is forwarded from the communication device 480 of a consumer to the participating communication provider 420 over an electronic communication channel. At block 504, the participating communication provider 420 forwards the request to the request-handling module 442.

The service router component 456 processes the request and activates the intent module 458 to determine the intent of the request at block 506. At block 508, the service router component 456 queries the participating communication provider database 424 to determine the virtual key associated with the consumer based on the identification of the communication device 480 in the request. Once the virtual key and the intent of the request are identified, the service router component 456 activates the service authorizer component 460 to determine if the transaction has the necessary authorization level at block 510. The authorization level is determined by the service authorizer component 460.

If the necessary authorization level is not approved, a request denied message is returned to the communication device 480 via the participating communication provider 424 at block 512. If the necessary authorization level is denoted as approved, the service router component 456 queries the participating company database 426 in order to determine the internal customer ID associated with the previously identified virtual key at block 514. At block 516, the service router component 456 activates the interface component 462 based on the intent of the request and passes the request along with the internal customer ID to the interface component 462 for processing.

The interface component 462 queries the participating business, in this example, the participating company 418, to execute the consumer request at block 518. At block 520, the participating business generates a response to the request and forwards the response to the interface component 462. The response is formatted by the interface component 462, and forwarded to the communication component 464 via the service router component 456 at block 522. At block 524, the communication component 464 transmits the response back to the consumer on an electronic communication channel identified with the request and determined by the service router component 456.

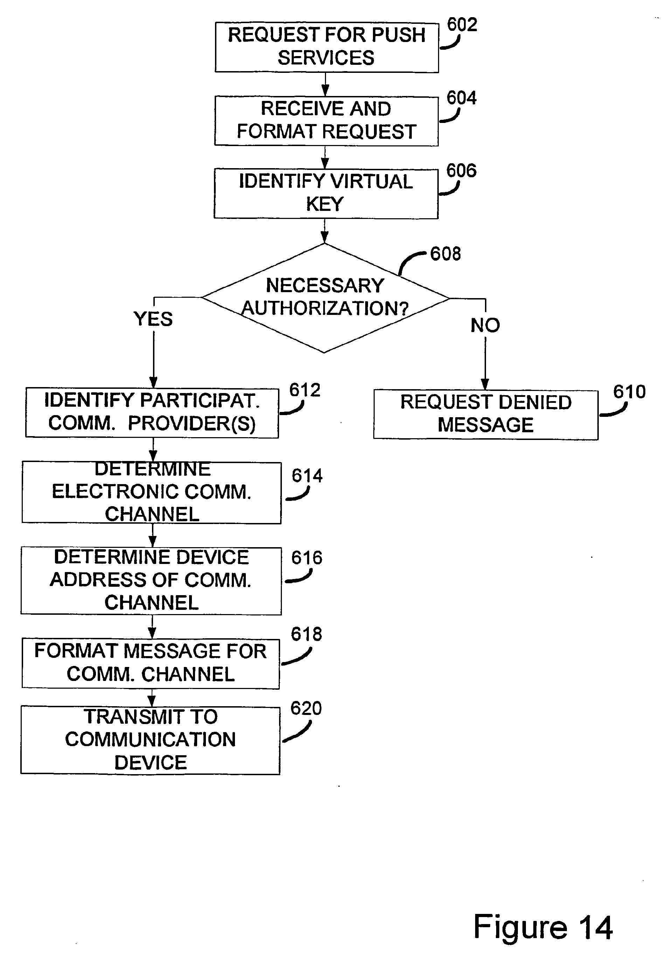

Referring now to the flow diagram of Fig. 14, an operational example of the VCDB system 410 illustrated in Fig. 12 will be explained when a request for push services is received by the VCDB system 410. Similar to the operation described with reference to Fig. 13, the VCDB system 410 has previously been populated with data.

The operation begins at block 602, where a request for push services is forwarded from one of the participating businesses 412, in the illustrated example, the participating company 418, to the request-handling module 442. At block 604, the interface component 462 receives, processes, formats and forwards the request to the service router component 456. The service router component 456 queries the appropriate participating company database 426 to identify a virtual key at block 606 based on the company ID and the internal customer ID of the consumer identified in the request. At block 608, the service router component 456 activates the service authorizer component 460 to determine whether the transaction has the necessary authorization level.

If the authorization level is insufficient, a request denied message is returned via the interface component 462 to the originator of the request at block 610. If the authorization is denoted as approved, the service router component 456 utilizes the virtual key to query the consumer/company cross reference database 430 to identify participating communication provider(s) 420 available to provide communication services to the consumer at block 612. In addition, at block 614, the service router component 456 queries the consumer internal profile database 432 to determine which electronic communication channel should be used in this situation (based on time of day, business sending the message, importance of the message, etc.). In the illustrated example, the electronic communication channel for the communication device 480 associated with the company ID of the participating communication provider 420 is identified.

Following identification of the electronic communication channel, the service router component 456 queries the participating communication provider database 424 based on the company ID and the virtual key to determine the device address of the communication device 480 at block 616. At block 618, the service router component 456 activates the communication component 464 to format a message for the consumer appropriate for the identified electronic communication channel. The communication component 464 transmits the information to the communication device 480 based on the previously determined electronic communication channel and the preferences of the consumer at block 620.

The previously discussed VCDB system 410 may provide personalized services to consumers in the form of real-time external access to personalized customer data and related services. The personalized customer data and services may be provided from participating businesses 412 without requiring the participating businesses 412 to directly share customer data with each other. In addition, the VCDB system 410 acts as a liaison allowing consumers to request customer specific information without including identifying information specific to a participating business. Similarly, the participating businesses 412 may utilize the VCDB system 410 to successfully request notification of consumers without specification of the communication channels used for notification.

While the invention has been described in its currently best-known modes of operation and embodiments, other modes, embodiments and advantages of the present invention will be apparent to those skilled in the art and are contemplated herein.

## Claims

1. A multi-modal messaging system (10) for connection to a wireless terminal (14) through a wireless access network (16) comprising:
a multi-modal message server (20) connected to said wireless access network (16) said server (20) being operable to receive a voice request for information from said wireless terminal (14);
a voice-recognition application (22) operable to identify a plurality of words contained in said voice request for information;
a content database (34) configured to store information that may be responsive to said voice request for information;
a voice print application (24) configured to analyze speech patterns of said identified plurality of words contained in said voice request for information and limit access to said content database (34) responsive to the analysis of the speech pattern;
a response-generation application (28) operable to generate a first and second response to said voice request for information based at least in part on said identified plurality of words; and
wherein said first and second response is transmitted to said wireless terminal (14).

2. The multi-modal messaging system of claim 1, wherein said voice request for information is in the form of a natural language statement.

3. The multi-modal messaging system of claim 2, further comprising a natural language processing application (26) operable to interpret an intent associated with said voice request for information.

4. The multi-modal messaging system of claim 1, further comprising a location information application (30) for generating a geographic location indication of said wireless terminal (14), wherein said first and second response is based at least in part on the geographic location indication of said wireless terminal (14).

5. The multi-modal messaging system of claim 1, further comprising a virtual customer database (32) connected to said multi-modal message server for providing a profile of said wireless terminal (14).

6. The multi-modal messaging system of claim 5, wherein said profile includes a customer identification.

7. The multi-modal messaging system of claim 5, wherein said profile includes a device characteristic indication associated with said wireless terminal (14).

8. The multi-modal messaging system of claim 7, wherein said device characteristic indication allows said first and second response to be generated in a format compatible with said wireless terminal (14).

9. The multi-modal messaging system of claim 1, wherein said first response comprises a voice-based response.

10. The multi-modal messaging system of claim 1, wherein said second response comprises a text-based response.

11. The multi-modal messaging system of claim 10, further comprising a transcoding application (38) for formatting said text-based response into a protocol capable of being displayed on a display of said wireless terminal (14) in a format that is compatible with said display of said wireless terminal (14) .

12. The multi-modal messaging system of claim 1, wherein said first and second response are selected from a group of responses consisting of a voice-based response, a text-based response, a voice-mail response, an instant message response, an email response or a fax response.

13. The multi-modal messaging system of claim 1, further comprising:
a unified messaging application (36) operable to generate said first response in a first message format and said second response in a second message format.

14. The multi-modal messaging system of claim 13, wherein said unified messaging application (36) further generates a third response in a third message format, wherein said third response is transmitted to a second terminal.

15. The multi-modal messaging system of claim 14, wherein said second terminal is an email server.

16. The multi-modal messaging system of claim 14, wherein said second terminal is a voice mail device.

17. The multi-modal messaging system of claim 14, wherein said second terminal is a computer terminal having an instant message application, wherein said third message format is an instant message addressed to said instant message application of said second terminal.

18. The multi-modal messaging system of claim 1, wherein said first and second response to said request for information is generated by searching a participating company database (426) containing a plurality of records with information responsive to said request for information.

19. The multi-modal messaging system of claim 18, wherein said participating company database (426) is located on a participating company server connected to said multi-modal message server (20).

20. A method of providing multi-modal messages in a wireless communication system (16) responsive to a voice request for information from a wireless terminal (14), the method comprising the steps of:
generating a voice request for information using the wireless terminal (14);
receiving said voice request for information at a multi-modal message server (20);
identifying a plurality of words contained in said voice request for information;
analyzing speech patterns of said voice request for information;
if the speech patterns of said voice request for information are not recognized, denying said voice request for information;
if the speech patterns of said voice request for information are recognized, generating a first and second response to said voice request for information based at least in part on said identified plurality of words; and
transmitting said first and second response to said wireless terminal (14).

21. The method of claim 20, wherein said voice request for information is a natural language statement.

22. The method of claim 21, further comprising the step of identifying an intent associated with said words contained in said voice request for information, wherein said response is based at least in part on the intent of said voice request for information.

23. The method of claim 22, wherein a natural language processing application (26) is used to identify the intent of said words.

24. The method of claim 20, wherein said first response is a voice-based response.

25. The method of claim 24, further comprising the step of using a text-to-speech application (104) to generate said voice-based response that is sent to said wireless terminal (14) .

26. The method of claim 20, wherein said second response is a text-based response.

27. The method of claim 20, wherein said second response is a graphics-based response.

28. The method of claim 20, wherein said first and second response are selected from a group of responses consisting of a voice-based response, a text-based response, a voice-mail response, an instant message response, an email response or a fax response.

29. The method of claim 20, wherein said first and second responses are predefined by a user preference indication contained in a virtual customer database (32).

## Patentansprüche

1. Multimodales Messaging-System (10) zur Verbindung mit einem Drahtlos-Endgerät (14) über ein Drahtlos-Zugangsnetzwerk (16), das umfasst:
einen multimodalen Nachrichtenserver (20), der mit dem Drahtlos-Zugangsnetzwerk (16) verbunden ist, wobei der Server (20) so betrieben werden kann, dass er eine gesprochene Anforderung von Informationen von dem Drahtlos-Endgerät (14) empfängt;
eine Spracherkennungsanwendung (22), die so betrieben werden kann, dass sie eine Vielzahl von Worten identifiziert, die in der gesprochenen Anforderung von Informationen enthalten sind;
eine Inhalts-Datenbank (34), die so konfiguriert ist, dass sie Informationen speichert, die Antwort auf die gesprochene Anforderung von Informationen darstellen können;
eine Stimmabdruck-Anwendung (24), die so konfiguriert ist, dass sie Sprachmuster der identifizierten Vielzahl von Worten analysiert, die in der gesprochenen Anforderung von Informationen enthalten sind und Zugang zu der Inhalts-Datenbank (34) in Reaktion auf die Analyse des Sprachmusters begrenzt;
eine Antworterzeugungsanwendung (28), die so betrieben werden kann, dass sie eine erste und eine zweite Antwort auf die gesprochene Anforderung von Informationen wenigstens teilweise auf der identifizierten Vielzahl von Worten basierend erzeugt; und
wobei die erste und die zweite Antwort zu dem Drahtlos-Endgerät (14) gesendet werden.

2. Multimodales Messaging-System nach Anspruch 1, wobei die gesprochene Anforderung von Informationen die Form einer Äußerung in natürlicher Sprache hat.

3. Multimodales Messaging-System nach Anspruch 2, das des Weiteren eine Anwendung (26) zum Verarbeiten natürlicher Sprache umfasst, die so betrieben werden kann, dass sie eine Absicht interpretiert, die mit der gesprochenen Anforderung von Informationen verbunden ist.

4. Multimodales Messaging-System nach Anspruch 1, das des Weiteren eine Standortinformations-Anwendung (30) zum Erzeugen einer Anzeige des geographischen Standorts des Drahtlos-Endgerätes (14) umfasst, wobei die erste und die zweite Antwort wenigstens teilweise auf der Anzeige des geographischen Standortes des Drahtlos-Endgerätes (14) basieren.

5. Multimodales Messaging-System nach Anspruch 1, das des Weiteren eine virtuelle Kunden-Datenbank (32) umfasst, die mit dem multimodalen Nachrichten-Server verbunden ist, um ein Profil des Drahtlos-Endgerätes (14) bereitzustellen.

6. Multimodales Messaging-System nach Anspruch 5, wobei das Profil eine Kundenkennung enthält.

7. Multimodales Messaging-System nach Anspruch 5, wobei das Profil eine Anzeige von Geräteeigenschaften enthält, die mit dem Drahtlos-Endgerät (14) verbunden ist.

8. Multimodales Messaging-System nach Anspruch 7, wobei die Anzeige von Geräteeigenschaften es ermöglicht, die erste und die zweite Antwort in einem Format zu erzeugen, das mit dem Drahtlos-Endgerät (14) kompatibel ist.

9. Multimodales Messaging-System nach Anspruch 1, wobei die erste Antwort eine sprachbasierte Antwort umfasst.

10. Multimodales Messaging-System nach Anspruch 1, wobei die zweite Antwort eine textbasierte Antwort umfasst.

11. Multimodales Messaging-System nach Anspruch 10, das des Weiteren eine Transkodier-Anwendung (38) zum Formatieren der textbasierten Antwort in ein Protokoll umfasst, das auf einer Anzeigeeinrichtung des Drahtlos-Endgerätes (14) in einem Format angezeigt werden kann, das mit der Anzeigeeinrichtung des Drahtlos-Endgerätes (14) kompatibel ist.

12. Multimodales Messaging-System nach Anspruch 1, wobei die erste und die zweite Antwort aus einer Gruppe von Antworten ausgewählt werden, die aus einer sprachbasierten Antwort, einer textbasierten Antwort, einer Voice-Mail-Antwort, einer Instant-Message-Antwort, einer E-Mail-Antwort oder einer Fax-Antwort besteht.

13. Multimodales Messaging-System nach Anspruch 1, das des Weiteren umfasst:
eine Unified-Messaging-Anwendung (36), die so betrieben werden kann, dass sie die erste Antwort in einem ersten Nachrichtenformat und die zweite Antwort in einem zweiten Nachrichtenformat erzeugt.

14. Multimodales Messaging-System nach Anspruch 13, wobei die Unified-Messaging-Anwendung (36) des Weiteren eine dritte Antwort in einem dritten Nachrichtenformat erzeugt, und die dritte Antwort zu einem zweiten Endgerät gesendet wird.

15. Multimodales Messaging-System nach Anspruch 14, wobei das zweite Endgerät ein E-Mail-Server ist.

16. Multimodales Messaging-System nach Anspruch 14, wobei das zweite Endgerät eine Voice-Mail-Einrichtung ist.

17. Multimodales Messaging-System nach Anspruch 14, wobei das zweite Endgerät ein Computer-Endgerät ist, das eine Instant-Message-Anwendung aufweist, und das dritte Nachrichtenformat eine Instant Message ist, die an die Instant-Message-Anwendung des zweiten Endgerätes adressiert ist.

18. Multimodales Messaging-System nach Anspruch 1, wobei die erste und die zweite Antwort auf die Anforderung von Informationen erzeugt werden, indem die Datenbank (426) eines teilnehmenden Unternehmens durchsucht wird, die eine Vielzahl von Einträgen mit Informationen enthält, die Antworten auf die Anforderung von Informationen sind.

19. Multimodales Messaging-System nach Anspruch 18, wobei die Datenbank (426) des teilnehmenden Unternehmens sich auf einem Server des teilnehmenden Unternehmens befindet, der mit dem multimodalen Nachrichten-Server (20) verbunden ist.

20. Verfahren zum Bereitstellen von multimodalen Nachrichten in einem Drahtlos-Kommunikationssystem (16) in Reaktion auf eine gesprochene Anforderung von Informationen von einem Drahtlos-Endgerät (14), wobei das Verfahren die folgenden Schritte umfasst:
Erzeugen einer gesprochenen Anforderung von Informationen unter Verwendung des Drahtlos-Endgerätes (14);
Empfangen der gesprochenen Anforderung von Informationen an einem multimodalen Nachrichten-Server (20);
Identifizieren einer Vielzahl von Worten, die in der gesprochenen Anforderung von Informationen enthalten sind;
Analysieren von Sprachmustern der gesprochenen Anforderung von Informationen;
wenn die Sprachmuster der gesprochenen Anforderung von Informationen nicht erkannt werden, Ablehnen der gesprochenen Anforderung von Informationen;
wenn die Sprachmuster der gesprochenen Anforderung von Informationen erkannt werden, Erzeugen einer ersten und einer zweiten Antwort auf die gesprochene Anforderung von Informationen wenigstens teilweise auf der identifizierten Vielzahl von Worten basierend; und
Senden der ersten und der zweiten Antwort zu dem Drahtlos-Endgerät (14).

21. Verfahren nach Anspruch 20, wobei die gesprochene Anforderung von Informationen eine Äußerung in natürlicher Sprache ist.

22. Verfahren nach Anspruch 21, das des Weiteren den Schritt des Identifizierens einer Absicht umfasst, die mit den in der gesprochenen Anforderung von Informationen enthaltenden Worten verbunden ist, wobei die Antwort wenigstens teilweise auf der Absicht der gesprochenen Anforderung von Informationen basiert.

23. Verfahren nach Anspruch 22, wobei eine Anwendung (26) zum Verarbeiten natürlicher Sprache verwendet wird, um die Absicht der Worte zu identifizieren.

24. Verfahren nach Anspruch 20, wobei die erste Antwort eine sprachbasierte Antwort ist.

25. Verfahren nach Anspruch 24, das des Weiteren den Schritt des Anwendens einer Sprachausgabe-Anwendung (104) zum Erzeugen der sprachbasierten Antwort umfasst, die zu dem Drahtlos-Endgerät (14) gesendet wird.

26. Verfahren nach Anspruch 20, wobei die zweite Antwort eine textbasierte Antwort ist.

27. Verfahren nach Anspruch 20, wobei die zweite Antwort eine graphikbasierte Antwort ist.

28. Verfahren nach Anspruch 20, wobei die erste und die zweite Antwort aus einer Gruppe von Antworten ausgewählt werden, die aus einer sprachbasierten Antwort, einer textbasierten Antwort, einer Voice-Mail-Antwort, einer Instant-Message-Antwort, einer E-Mail-Antwort oder einer Fax-Antwort besteht.

29. Verfahren nach Anspruch 20, wobei die erste und die zweite Antwort durch eine Anzeige der Nutzerpräferenz vordefiniert sind, die in einer virtuellen Kunden-Datenbank (32) enthalten ist.

## Revendications

1. Système de messagerie multimodale (10) destiné à être raccordé à un terminal sans fil (14) à travers un réseau d'accès sans fil (16) comprenant :
un serveur de message multimodal (20) raccordé au dit réseau d'accès sans fil (16), ledit serveur (20) pouvant être actionné pour recevoir une requête vocale d'informations en provenance dudit terminal sans fil (14) ;
une application de reconnaissance vocale (22) pouvant être actionnée pour identifier une pluralité de mots contenus dans ladite requête vocale d'informations ;
une base de données de contenu (34) configurée pour stocker des informations qui peuvent être sensibles à ladite requête vocale d'informations ;
une application d'impression vocale (24) configurée pour analyser des modèles de discours de ladite pluralité de mots identifiée contenue dans ladite requête vocale d'informations et limiter l'accès à ladite base de données de contenu (34) en réponse à l'analyse du modèle de discours ;
une application de génération de réponse (28) pouvant être actionnée pour générer une première et une deuxième réponses à ladite requête vocale d'informations en fonction au moins en partie de ladite pluralité de mots ; et
dans lequel lesdites première et deuxième réponses sont transmises au dit terminal sans fil (14).

2. Système de messagerie multimodale selon la revendication 1, dans lequel ladite requête vocale d'informations est sous la forme d'une instruction en langage naturel.

3. Système de messagerie multimodale selon la revendication 2, comprenant en outre une application de traitement de langage naturel (26) pouvant être actionnée pour interpréter une intention associée à ladite requête vocale d'informations.

4. Système de messagerie multimodale selon la revendication 1, comprenant en outre une application d'informations de localisation (30) destinée à générer une indication de localisation géographique dudit terminal sans fil (14), dans laquelle lesdites première et deuxième réponses sont fondées au moins en partie sur l'indication de localisation géographique dudit terminal sans fil (14).

5. Système de messagerie multimodale selon la revendication 1, comprenant en outre une base de données de clients virtuelle (32) raccordée au dit serveur de message multimodal destinée à fournir un profil dudit terminal sans fil (14).

6. Système de messagerie multimodale selon la revendication 5, dans lequel ledit profil comprend une identification de client.

7. Système de messagerie multimodale selon la revendication 5, dans lequel ledit profil comprend une indication caractéristique de dispositif associée au dit terminal sans fil (14).

8. Système de messagerie selon la revendication 7, dans lequel ladite indication caractéristique de dispositif permet aux dites première et deuxième réponses d'être générées dans un format compatible avec ledit terminal sans fil (14).

9. Système de messagerie multimodale selon la revendication 1, dans lequel ladite première réponse comprend une réponse basée sur la voix.

10. Système de messagerie multimodale selon la revendication 1, dans lequel ladite deuxième réponse comprend une réponse basée sur du texte.

11. Système de messagerie multimodale selon la revendication 10, comprenant en outre une application de transcodage (38) destinée à formater ladite réponse basée sur du texte en un protocole capable d'être affiché sur un affichage dudit terminal sans fil (14) dans un format qui est compatible avec ledit affichage dudit terminal sans fil (14).

12. Système de messagerie multimodale selon la revendication 1, dans lequel lesdites première et deuxième réponses sont sélectionnées dans un groupe de réponses constituées d'une réponse basée sur la voix, une réponse basée sur du texte, une réponse par message vocal, une réponse par message instantané, et une réponse par courrier électronique ou une réponse par télécopie.

13. Système de messagerie multimodale selon la revendication 1, comprenant en outre :
une application de messagerie unifiée (36) pouvant être actionnée pour générer ladite première réponse dans un premier format de message et ladite deuxième réponse dans un deuxième format de message.

14. Système de messagerie multimodale selon la revendication 13, dans lequel ladite application de messagerie unifiée (36) génère en outre une troisième réponse dans un troisième format de message, dans lequel ladite troisième réponse est émise vers un deuxième terminal.

15. Système de messagerie multimodale selon la revendication 14, dans lequel ledit deuxième terminal est un serveur de courrier électronique.

16. Système de messagerie multimodale selon la revendication 14, dans lequel ledit deuxième terminal est un dispositif de messagerie vocale.

17. Système de messagerie multimodale selon la revendication 14, dans lequel ledit deuxième terminal est un terminal information comprenant une application de messagerie instantanée, dans lequel ledit troisième format de message est un message instantané adressé à ladite application de messagerie instantanée dudit deuxième terminal.

18. Système de messagerie multimodale selon la revendication 1, dans lequel lesdites première et deuxième réponses à ladite requête d'informations sont générées en recherchant une base de données de société membre (426) contenant une pluralité d'enregistrements avec des informations sensibles à ladite requête d'informations.

19. Système de messagerie multimodale selon la revendication 18, dans lequel ladite base de données de société membre (426) est située sur un serveur de société membre raccordé au dit serveur de message multimodal (20).

20. Procédé de fourniture de messages multimodaux dans un système de communication sans fil (16) en réponse à une requête vocale d'informations d'un terminal sans fil (14), le procédé comprenant les étapes consistant à :
générer une requête vocale d'informations à l'aide du terminal sans fil (14) ;
recevoir ladite requête vocale d'informations au niveau d'un serveur de message multimodal (20) ;
identifier une pluralité de mots contenus dans ladite requête vocale d'informations ;
analyser des modèles de discours de ladite requête vocale d'informations ;
si les modèles de discours de ladite requête vocale d'informations ne sont pas reconnus, rejeter ladite requête vocale d'informations ;
si les modèles de discours de ladite requête vocale d'informations sont reconnus, générer des première et deuxième réponses à ladite requête vocale d'informations en fonction au moins en partie de ladite pluralité de mots identifiée ; et
émettre lesdites première et deuxième réponses vers ledit terminal sans fil (14).

21. Procédé selon la revendication 20, dans lequel ladite requête vocale d'informations est une instruction en langage naturel.

22. Procédé selon la revendication 21, comprenant en outre l'étape consistant à identifier une intention associée aux dits mots contenus dans ladite requête vocale d'informations, dans lequel ladite réponse est fondée au moins en partie sur l'intention de ladite requête vocale d'informations.

23. Procédé selon la revendication 22, dans lequel une application de traitement de langage naturel (26) est utilisée pour identifier l'intention desdits mots.

24. Procédé selon la revendication 20, dans lequel ladite première réponse est une réponse basée sur la voix.

25. Procédé selon la revendication 24, comprenant en outre l'étape consistant à utiliser une application de synthèse de la parole à partir du texte (104) pour générer ladite réponse basée sur la voix qui est envoyée au dit terminal sans fil (14).

26. Procédé selon la revendication 20, dans lequel ladite deuxième réponse est une réponse basée sur du texte.

27. Procédé selon la revendication 20, dans lequel ladite deuxième réponse est une réponse basée sur du graphique.

28. Procédé selon la revendication 20, dans lequel lesdites première et deuxième réponses sont sélectionnées dans un groupe de réponses comprenant une réponse basée sur la voix, une réponse basée sur du texte, une réponse par message vocal, une réponse par message instantané, une réponse par courrier électronique ou une réponse par télécopie.

29. Procédé selon la revendication 20, dans lequel lesdites première et deuxième réponses sont prédéfinies par une indication de préférence utilisateur contenue dans une base de données de clients virtuelle (32).
